# EUROPEAN PATENT APPLICATION

(11) **EP 3 385 268 A1**
(43) Date of publication of application: **10.10.2018**
(21) Application number: 16870332.0
(22) Date of filing: 21.10.2016
(51) Int. Cl.: C07F 7/10, C07F 7/08, C08F 30/08, C08G 77/04, C07B 61/00

(54) **LINEAR ORGANOPOLYSILOXANE HAVING DIFFERENT FUNCTIONAL GROUPS AT BOTH TERMINALS, AND METHOD FOR PRODUCING SAME**

(30) Priority: 04.12.2015 JP 2015237342; 27.09.2016 JP 2016188535
(71) Applicant: Shin-Etsu Chemical Co., Ltd., Tokyo 100-0004 (JP)
(72) Inventor: OKAMURA Kaoru, Annaka-shi Gunma 379-0224 (JP)
(74) Representative: Nony
(86) International application number: PCT/JP2016/081233
(87) International publication number: WO 2017/094392

(57) **Abstract**

[Problem] The present invention aims to prove an organopolysiloxane compound that has different functional groups at terminals of the polysiloxane and that has a sufficient siloxane content, and a method for producing the same. The present invention also provides a polysiloxane compound having a terminal amino group and another terminal functional group, and a method for producing the same. [Solution] The present invention provides a silicone compound represented by general formula (I) and having different functional groups at terminals. The silicone compound has, at one terminal of the diorganopolysiloxane (i.e., A-terminus in general formula (I)), a functional group that is unreactive with an organometallic compound, a functional group that is radically polymerizable or a functional group that is reactive with an organometallic compound (a first organic functional group) or an atom, and, at the other terminal (i.e., B-terminus in general formula (I)), a hydrogen atom or a group or atom (second organic functional group) selected from the above-mentioned organic functional groups or atoms, which is different from that located at the one terminal (A-terminus). The present invention also provides a method for producing a silicone compound represented by general formula (I). The method comprises the steps of: reacting a cyclic siloxane or a disiloxane, each having a first organic functional group, with an organometallic compound; and reacting a metal silicate compound thus obtained with a halogenated silyl compound having a second organic functional group.

## Description

### TECHNICAL FIELD

The present invention relates to a linear organopolysiloxane having different functional groups at terminals and a method for producing the same. The present invention also provides a polysiloxane compound having an amino group at one terminal and a different functional group at the other terminal, and a method for producing the same.

### BACKGROUND

Conventionally, organopolysiloxanes comprising one or more organic functional groups have been widely used as resin modifiers in the fields of paints, molding materials, medical materials, and various coating materials, to impart desirable characteristics, such as heat resistance, weatherability, mold releasability, moldability and processability, and thermal shock resistance, to organic resins.

For such an organopolysiloxane having an organic functional group, Patent Literature 1 discloses a compound having a functional group at both terminals of dimethylpolysiloxane. Also, Patent Literature 2 proposes a methylpolysiloxane having a functional group on a side chain. However, both of these organopolysiloxanes have only one type of a functional group.

An organopolysiloxane having one type of a functional group at both terminals and/or side chains shows properties characteristic to the particular type of a functional group, and does not show different properties of a plurality of functional groups. There is no difference in reactivity between the functional groups in such a polysiloxane. Then, it is difficult to precisely control the reaction, for instance, by two different crosslinking processes or polymerization and crosslinking separately.

Patent Literature 3 discloses an organopolysiloxane having different types of functional groups in a single molecule. It also describes the preparation of an organopolysiloxane having a plurality of different functional groups at side chains, introduced by the reaction of a side-chain hydrogen polysiloxane with a plurality of different allyl compounds.

However, the organopolysiloxane described in Patent Literature 3 has functional groups at side chains where the steric hindrance is large, and its structure is not definite because the functional groups are introduced on an average basis. Therefore, precise control of the reaction is not satisfactorily made.

Patent Literature 4 discloses an organosiloxane having a hydrophilic group and a polymerizable group at respective terminal end, which is useful as a material for medical devices. It also discloses a method in which a siloxane having a hydrogen atom at both terminals is reacted with a first allyl compound to introduce a first functional group, followed by purification to yield an organosiloxane having two different terminal groups, i.e., a first functional group and a hydrogen silyl group, and then the remaining hydrogen silyl group is further reacted with a second ally group to form an organosiloxane having each different functional groups at each terminal.

The production method described in Patent Literature 4 requires distillation or column purification during the step of obtaining the organosiloxane having a first functional group and a hydrogen silyl group. In principle, only a low molecular weight organosiloxane can be produced by this method. Therefore, compounds produced by the method described in Patent Literature 4 have a low siloxane content, which is insufficient to satisfactorily impart characteristics of silicone to polymers into which the siloxane is incorporated as a raw material.

### PRIOR LITERATURES

Patent Literature 1: Japanese Patent Application Laid-Open No. SHO58-217515/1983 (A)
Patent Literature 2: Japanese Patent No. 3779187 (B2)
Patent Literature 3: Japanese Patent No. 3063712 (B2)
Patent Literature 4: Japanese National Phase Publication No. 2014-505067 (T)
Patent Literature 5: Japanese Patent Application Laid-Open No. 2009-256660 (A)
Patent Literature 6: Japanese Patent Application Laid-Open No. HEI02-49793/1990 (A)

### SUMMARY OF THE INVENTION

### PROBLEMS TO BE SOLVED BY THE INVENTION

An organopolysiloxane compound having different functional groups at terminals would be useful in the fields of resin modifiers, medical device materials and the like. However, currently such a material is not available that has a definite structure and that enables one to fully take advantages of siloxane characteristics.

Although a variety of terminal aminofunctional silicone compounds are known in the art, they are either a silicone compound having amino groups at both terminals or an amino group at only one terminal (Patent Literatures 5 and 6). We consider that a silicone compound that has an amino group at one terminal and another terminal functional group at the other terminal is useful as a resin modifier, because it can react with two different substrates on account of the difference in reactivity of the two functional groups present in one compound. However, no substantial investigation has been conducted to date.

For example, [1] it might be considered to produce a silicone having a terminal amino group and another terminal functional group by the reaction between a both-terminal aminofunctional silicone and a both-terminal carbinolfunctional silicone in the presence of trifluoromethanesulfonic acid.

[2] A method might also be considered, comprising a step of reacting a vinyl compound with a large excess of both-terminal hydrogen silicone in the presence of a platinum catalyst, a step of purification by distillation or the like, and a step of further reacting it with allylamine to form a silicone having a terminal amino group and another terminal functional group.

By the method [1] mentioned above, it is however difficult to selectively obtain a desired compound having different functional groups in one molecule, and a variety of structures of the products makes isolation impractical. The method [2] mentioned above is also impractical, in view of that the both-terminal aminofunctional silicone in a large excess is required, relative to the vinyl compound, in order to leave a terminal hydrogen atom at one terminal unreacted; that the subsequent purification step is difficult; and that the platinum is required in a large amount because allylamine is a catalyst poison. Further, the resulting silicone having a terminal amino group and another terminal functional group does not have a high purity, because dehydrogenation of allylamine with an -SiH occurs as a side reaction.

It is difficult, by these methods, to synthesize a silicone compound having a terminal amino group and another terminal functional group with a high purity. Accordingly, there exists a need for a high purity silicone compound having a terminal amino group and another terminal functional group, and for a method for producing the same.

Thus, it is an object of the present invention to provide an organopolysiloxane compound that has different functional groups at terminals and that has a sufficient siloxane content, and a process for producing the same. The present invention also provides a polysiloxane compound having a terminal amino group and another terminal functional group and a process for producing the same.

### MEANS TO SOLVE THE PROBLEMS

In order to achieve the above objective, the present inventor undertook an extensive investigation, and has found that a silicone compound having different organic functional groups at terminals can be prepared with a controlled siloxane content by a process comprising a step of reacting a cyclic siloxane or a disiloxane, each having a first organic functional group, with an organometallic compound, and a step of reacting a metal silicate compound thus obtained by the preceding step with a halogenated silyl compound having a second organic functional group, which led to the present invention.

Thus, the present invention provides a silicone compound represented by the general formula (I): 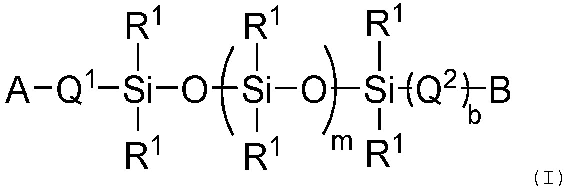 wherein R¹ is, independently at each occurrence, a substituted or unsubstituted, saturated or unsaturated, monovalent hydrocarbon group having 1 to 10 carbon atoms; "m" is an integer of from 1 to 300; Q¹ and Q² are, independently of each other, a substituted or unsubstituted, divalent hydrocarbon group having 1 to 20 carbon atoms, which may comprise one or more bonds selected from the group consisting of an amide bond, an ether bond, an ester bond, a urethane bond and an unsaturated bond; A is a functional group that is unreactive with an organometallic compound, a functional group that is radically polymerizable, or a functional group or atom that is reactive with an organometallic compound; B is a hydrogen atom, or a group or atom selected from the groups or atoms as defined above for A, with the proviso that A and B are functional groups or atoms different from each other; and "b" is 0 or 1, with the proviso that b is 0 when B is a hydrogen atom, and b is 1 when B is not a hydrogen atom.

The present invention also provides a method for preparing a silicone compound represented by the general formula (I). The method (hereinafter also called "Production Method A") comprises steps of:
reacting a cyclic siloxane of the formula (iii): 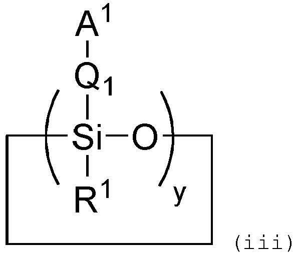 wherein "y" is an integer of from 3 to 10, R¹ and Q¹ are as defined above, and A¹ is a functional group that is unreactive with an organometallic compound,
   or a disiloxane of the formula (iv): 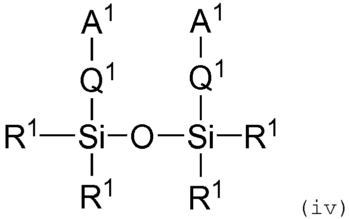 wherein R¹ and Q¹ are as defined above, and A¹ is a functional group that is unreactive with an organometallic compound;
   with an organometallic compound, to obtain a metal silicate compound of the formula (v): 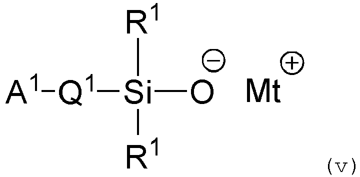 wherein R¹, Q¹, Mt is an alkali metal atom, and A¹ a functional group that is unreactive with an organometallic compound;
reacting the metal silicate compound of the formula (v) with a cyclic siloxane to obtain a siloxane of the formula (8'): 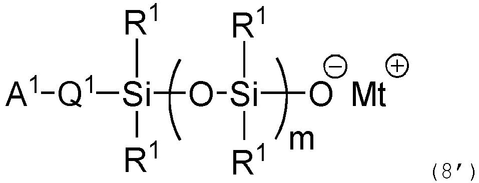 wherein R¹, Q¹, "m" and Mt are as defined above, and A¹ a functional group that is unreactive with an organometallic compound; and
reacting the siloxane of the formula (8') with a halogenated silyl compound.

The present invention further provides a silicone compound having a terminal amino group and another terminal functional group represented by the following general formula (1), and a method for producing the same (hereinafter also called "Production Method B") : 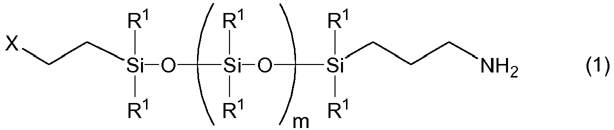 wherein "m" is an integer of from 1 to 6; X is an organic functional group having 0 to 48 carbon atoms; and R¹ is, independently at each occurrence, a substituted or unsubstituted hydrocarbon group having 1 to 6 carbon atoms.

The silicone compound of formula (1) having a terminal amino group and another terminal functional group may be prepared by subjecting a compound of the following formula (4) to a desilylation reaction: 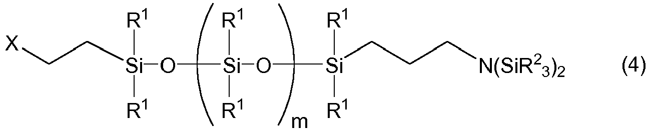 wherein "m", X and R¹ are as defined above, and R² is a C₁₋₃ alkyl group.

The compound of the general formula (4) may be prepared by an addition reaction of a hydrogen silicone of the following general formula (3): 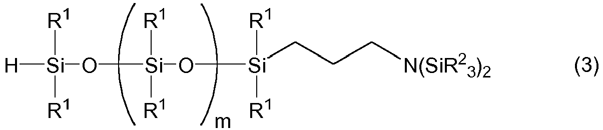 wherein "m", R¹ and R² are as defined above;
with a compound having an organic functional groups and a double bond, as represented by the following formula (5):

CH₂=CH-X (5)

wherein X is as defined above.

The compound of the formula (3) may be prepared by an addition reaction at one terminal Si-H of a dihydrogenpolysiloxane of the general formula (2): 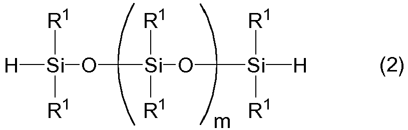 wherein "m" and R¹ are as defined above, with a bis(tri-C₁₋₃-alkylsilyl)allylamine of the formula (6):

CH₂=CHCH₂N(SiR²₃)₂ (6)

wherein R² is as defined above.

### EFFECTS OF THE INVENTION

The present silicone compound has different functional groups at terminals. According to the present production method, it is possible to precisely control the reaction, and the siloxane content of the resulting silicone compound can be adjusted appropriately. The present silicone compound is therefore useful as a resin modifier or a material for medical devices, while satisfactorily exhibiting desirable characteristics of the polysiloxane in such a use.

In addition, according to the present method for preparing a silicone of formula (1) having a terminal amino group and another terminal functional group from the compound (4), the silicone of the formula (1) can be produced with a very high purity. In a conventionally known reaction between a hydrogen polysiloxane and an amine, dehydrogenation with the amino group occurs significantly. Surprisingly, in the present method, the level of dehydrogenation with the amino group produced is extremely small, and a silicone a terminal amino groups and another terminal functional group can be obtained with a high purity. Even when an acid is allowed to act to promote the desilylation reaction, cleavage of the siloxane chain is very small and only the silyl group is selectively desilylated, so that the target compound of the general formula (1) can be produced with a high purity. It has been also found that desilylation proceeds well by choosing an optimal combination of a specific alcohol and a specific acid catalyst.

A silicone compound having an amino group at one terminal and another terminal functional group at the other terminal can undergo reaction with two different substrates based on the difference in reactivity of the two functional groups in one compound. For example, by the reaction of a resin having a group reactive with an amino group with the above-mentioned compound, said another terminal functional group can be introduced into the resin. In a system comprising a combination of a resin having a group reactive with an amino group and a resin having a group reactive with said another functional group, each of the resins can be selectively modified. As discussed above, according to the present invention, a silicone compound having an amino group at one terminal and another terminal functional group at the other terminal is useful as a resin modifier.

In addition, the present method for preparing a compound of the formula (3) enables a production of the compound of the formula (3) with a high purity.

As used herein, the term "high purity" indicates that a compound having a specific structure (that is, "m" is a specific integer, and X, R¹, R² and R³ each denotes one specific group) shows a peak area of 90% or more, preferably 95% or more, in a GPC or GC chromatogram. A high molecular weight compound, e.g., a compound of formula (1) or (4) may be analyzed by GPC, and a low molecular weight compound, e.g., a compound of formula (1), (2) or (3) may be analyzed by GC.

### Brief Description of the Drawings

Figure 1 is a ¹H-NMR chart of the product in Example B1.
Figure 2 is a ¹H-NMR chart of the product in Example B2.
Figure 3 is a ¹H-NMR chart of the residue obtained by the vacuum distillation in Example B3.
Figure 4 is a GPC chart of the residue obtained by the vacuum distillation in Example B3.

### DETAILED DESCRIPTION OF THE INVENTION

The present invention will be described in more detail below.

The present invention relates to a silicone compound represented by the general formula (I): 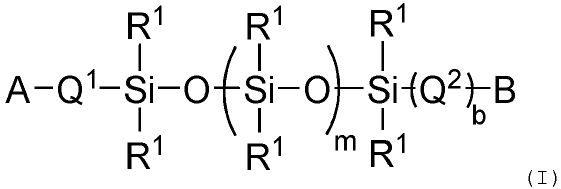 wherein R¹ is, independently at each occurrence, a substituted or unsubstituted, saturated or unsaturated, monovalent hydrocarbon group having 1 to 10 carbon atoms; "m" is an integer of from 1 to 300; Q¹ and Q² are, independently of each other, a substituted or unsubstituted, divalent hydrocarbon group having 1 to 20 carbon atoms, which may comprise one or more bonds selected from the group consisting of an amide bond, an ether bond, an ester bond, a urethane bond and an unsaturated bond; A is a functional group that is unreactive with an organometallic compound, a functional group that is radically polymerizable, or a functional group or atom that is reactive with an organometallic compound; B is a hydrogen atom, or a group or atom selected from the groups or atoms as defined above for A, with the proviso that A and B are functional groups or atoms different from each other; and "b" is 0 or 1, with the proviso that b is 0 when B is a hydrogen atom, and b is 1 when B is not a hydrogen atom.

In the formula (I), R¹ is, independently at each occurrence, an unsubstituted, saturated or unsaturated, monovalent hydrocarbon group having 1 to 20 carbon atom, preferably 1 to 10 carbon atoms, more preferably 1 to 8 carbon atoms, and especially preferably 1 to 6 carbon atoms, in which a part or all of the hydrogen atoms attached to the carbon atoms of these monovalent hydrocarbon group may be substituted with a functional group or a halogen atom. Examples of the unsubstituted monovalent hydrocarbon group include an alkyl group, such as methyl group, ethyl group, propyl group, butyl group, pentyl group, hexyl group, heptyl group, octyl group, nonyl group and decyl group; a cycloalkyl group, such as cyclopentyl group and cyclohexyl group; an aryl group, such as phenyl group and tolyl group; an alkenyl group, such as vinyl group and allyl group; and an aralkyl group, such as benzyl group. A part or all of the hydrogen atoms attached to the carbon atoms of these groups may be substituted with a functional group, such as hydroxy group, hydroxyalkyl group, amino group, aminoalkyl group, amide group, alkylamide group, alkoxy group, alkoxyalkyl group, alkoxycarbonyl group, and alkoxycarbonylalkyl group; or a halogen atom, such as chlorine or fluorine. Preferably, R¹ is an alkyl group of 1 to 6 carbon atoms, a phenyl group, or a group in which a part or all of the hydrogen atoms attached to the carbon atoms of these groups are substituted with a fluorine atom.

In the formula (I), "m" is an integer of from 1 to 300, preferably an integer of from 2 to 200, and more preferably an integer of from 3 to 100, but not limited thereto. It may be appropriately selected based on the desirable characteristics of the silicone compound.

In the formula (I), A and B are functional groups or atoms different from each other. A and B can be any functional groups or atoms in so far as they are different from each other, and their combination may be appropriately selected based on the desirable function of the silicone compound. Preferable combination is: a) A is a functional group that is unreactive with an organometallic compound, and B is a hydrogen atom, a functional group that is radically polymerizable, or a functional group or atom that is reactive with a organometallic compound; b) A is a functional group that is radically polymerizable, and B is a hydrogen atom, a functional group that is unreactive with an organometallic compound, or a functional group or atom that is reactive with an organometallic compound; or c) A is a functional group or atom that is reactive with an organometallic compound, and B is a hydrogen atom or a functional group or atom that is reactive with an organometallic compound and that is different from A.

In the formula (I), the functional group that is unreactive with an organometallic compound may be a silylated hydroxyl group, a benzylated hydroxyl group, a silylated 1,2-ethanediol group, a benzylated 1,2-ethanediol group, an alkoxy group, an alkenyl group, a tertiary amino group, a silylated tertiary amino group, a benzylated tertiary amino group, a quaternary ammonium group, a styryl group, a nitro group, an azide group, an aryl group, an arylalkenyl group, a silylated phenol group, or a silylated thiol group.

Examples of the radically polymerizable functional group include (meth)acryloyl group, (meth)acrylamide group and the like.

Examples of the functional group that is reactive with an organometallic compound include an epoxy group, a carboxyl group, an isocyanate group, an alkoxysilyl group, a hydroxyl group, a 1, 2-ethanediol group, a primary amino group, a secondary amino group, a phenol group, a thiol group and the like. An atom that is reactive with an organometallic compound is, for example, a halogen atom.

Preferably, A is selected from a hydroxyl group, a silylated hydroxyl group, a benzylated hydroxyl group, a 1,2-ethanediol group, a silylated 1,2-ethanediol group, a benzylated 1,2-ethanediol group, an alkoxy group, an alkenyl group, primary amino group, a tertiary amino group, a silylated tertiary amino group, a quaternary ammonium group, and a halogen atom.

A preferable combination may be one in which A is a group selected from a silylated hydroxyl group, an alkoxy group, an alkenyl group, a benzylated hydroxyl group, a hydroxyl group, a primary amino group and a tertiary amino group; and B is a group selected from a hydrogen atom, a (meth)acryloyl group, a (meth)acrylamide group, a hydroxyl group, a primary amino group, a tertiary amino group, an epoxy group and an alkoxysilyl group, with a proviso that A and B are different from each other.

Another preferable combination may be one in which A is selected from a silylated tertiary amino group, a benzylated tertiary amino group, a quaternary ammonium group, and a halogen atom; and B is a group selected from a (meth) acryloyl group, a (meth) acrylamide group, an epoxy group, and an alkoxysilyl group.

Further, the present invention particularly provides a silicone compound in which either one of A and B is a radically polymerizable functional group. This silicone compound may be polymerized with a copolymer described below to provide a colorless and transparent polymer, which may be suitably used to provide an ophthalmic device.

In the formula (I), Q¹ and Q² are, independently of each other, a substituted or unsubstituted, divalent hydrocarbon group having 1 to 20 carbon atoms, which may comprise one or more bonds selected from the group consisting of an amide bond, an ether bond, an ester bond, a urethane bond and an unsaturated bond. Examples of the divalent hydrocarbon group include a divalent group, such as ethylene, 1,3-propylene, 1-methylpropylene, 1,1-dimethylpropylene, 2-methylpropylene, 1,2-dimethylpropylene, 1,1,2-trimethylpropylene, 1,4-butylene, 2-methyl-1,4-butylene, 2,2-dimethyl-1,4-butylene, 3-methyl-1,4-butylene, 2,2-dimethyl-1,4-butylene, 2,3-dimethyl-1,4-butylene, 2,2,3-trimethyl-1,4-butylene, 1,5-pentylene, 1,6-hexanylene, 1,7-heptanylene, 1,8-octanylene, 1,9-nonanylene, 1,10-decanylene and the like; a group in which a part or all of the hydrogen atoms attached to the carbon atoms of these groups are substituted with a hydroxy group, a hydroxyalkyl group, an amino group, an aminoalkyl group, an amide group, an alkylamide group, an alkoxy group, an alkoxyalkyl group, an alkoxycarbonyl group, an alkoxycarbonylalkyl group or the like; and a halogenated aklylene groups substituted with a halogen atom such as chlorine or fluorine. Examples of a group containing an ether bond include a polyalkylene oxide, such as polyethylene oxide, polypropylene oxide, polyethylene-propylene oxide and the like.

Q¹ and Q² may be, independently of each other, preferably represented by the following formula (i) or (ii): 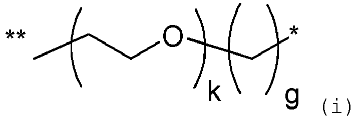 or 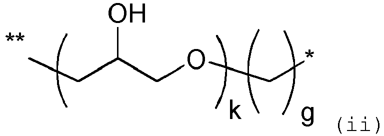 wherein "k" is an integer of from 0 to 6, "g" is an integer of from 1 to 4 when "k" equals zero, or "g" is an integer of from 1 to 17 when "k" is not zero, with the proviso that 1≦3k+g≦20, the symbol "*" denotes a site to which the silicon atom in formula (I) is attached; and the symbol "**" denotes a site to which A or B is attached. When "k" is not zero, it is preferable that "k" is 1 and "g" is an integer of from 1 to 4.

It is particularly preferable that Q¹ and Q² are an unsubstituted, divalent hydrocarbon that does not contain oxygen nor nitrogen atom. That is, a structure of the formula (i) or (ii) in which "k" =0 is preferable. The structure is preferably methylene, ethylene, propylene or butylene group, and particularly preferably a propylene group.

The present invention further provides a method for preparing a silicone compound represented by the formula (I). The method (Production Method A) according to the invention comprises:
reacting a siloxane of the formula (8): 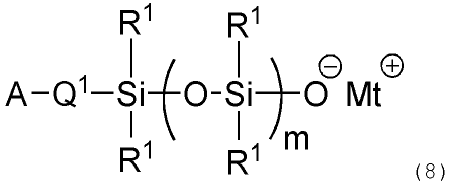 wherein R¹, Q¹, "m" and A are as defined above, and Mt is an alkali metal atom, such as lithium;
with a halogenated silyl compound of the formula (7): 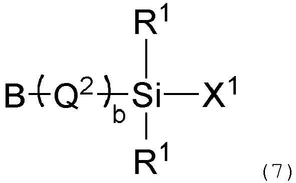 wherein R¹, Q², "b" and B are as defined above, and X¹ is a halogen atom, such as chlorine, fluorine or bromine atom, preferably a chlorine atom;
to obtain the silicone compound of the formula (I).

The above reaction may be carried out according to a conventionally known method. The amount of the halogenated silyl compound of the formula (7) to be added is preferably a molar ratio of from 0.8 to 2.0 moles relative to 1 mole of the compound of the formula (8), more preferably from 0.9 to 1.5 moles, and still more preferably from 1.0 to 1.2 moles.

Further, the Production Method A according to the invention may comprise steps of:
reacting a cyclic siloxane of the formula (iii): 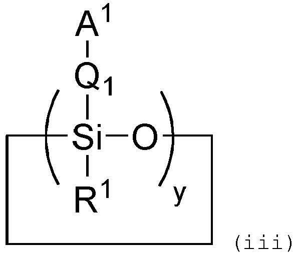 wherein "y" is an integer of from 3 to 10, R¹ and Q¹ are as defined above, and A¹ is a functional group or an atom that is unreactive with an organometallic compound,
   or a disiloxane of the formula (iv): 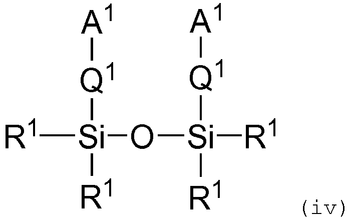 wherein R¹ and Q¹ are as defined above, and A¹ is a functional group or an atom that is unreactive with an organometallic compound; with the organometallic compound, to obtain a metal silicate compound of the formula(v): 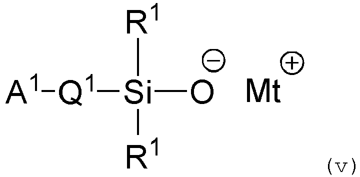 wherein R¹, Q¹, Mt is an alkali metal atom, and A¹ a functional group or an atom that is unreactive with an organometallic compound; and
reacting the metal silicate compound of the formula(v) with a cyclic siloxane to obtain a siloxane of the formula (8'): 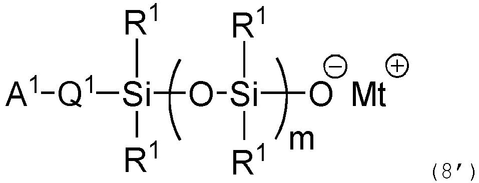 wherein R¹, Q¹, "m" and Mt are as defined above, and A¹ a functional group that is unreactive with an organometallic compound.

It should be noted that the cyclic siloxane that is reacted with the metal silicate compound of the formula (v) in the above process is an alkyl cyclopolysiloxane such as hexamethylcyclotrisiloxane, and is different from the cyclic siloxane of the formula (iii).

In this process, a compound of the formula (iii) or (iv) is reacted with an organometallic compound. The moiety A¹ in the formulas (iii) and (iv) is therefore a functional group that is unreactive with the organometallic compound. In this case, A¹ may be inactive (unreactive with the organometallic compound) during the reaction with the organometallic compound. Thus, it may be a reactive functional group that is protected with a protecting group known in the art to make it inactive. As a protective group for a hydroxyl group or an amino group, for example, a silyl group or a benzyl group can be mentioned. These protecting groups may be removed by a method known in the art after the reaction with the organometallic compound. For example, a silyl group may be removed in the presence of water or alcohol. This reaction may be accelerated in the presence of an acid or a base.

The compound of the formula (iii) or (iv) may be prepared by a method known in the art, for example, by hydrosilylation of 2,4,6,8-tetramethylcyclotetrasiloxane or 1,3-tetramethyl disiloxane with an organic compound having an unsaturated bond. The reaction may be carried out under a catalyst known in the art, for example, a noble metal catalyst. In particular, a platinum catalyst derived from chloroplatinic acid is suitable. In addition, a Karstedt catalyst is also suitable. The reaction may be carried out in a manner known in the art.

The organometallic compound may be a polymerization initiator, which can be any of those conventionally used for ring-opening polymerization of a cyclic siloxane. For example, it may be an organic compound having an alkali metal atom, in particular an organolithium compound. An organolithium compound is a compound having a carbon-lithium bond. Such a compound may be any compound known in the art. Examples of organolithium compound include methyllithium, ethyllithium, butyllithium, phenyllithium, benzyllithium and the like. In particular, an organolithium compound diluted in a hydrocarbon compound such as hexane or cyclohexane is preferable, and a solution of n-butyllithium in hexane is more preferable in view of ease of handling and availability. Also, an organomagnesium compound may be used as the organometallic compound. An organomagnesium compound is a compound having a carbon-magnesium bond and a magnesium-halogen bond.

The organometallic compound may be used in an amount to give a molar ratio of 1 mole relative to 1 mole of the siloxane of the formula (iii) or (iv) . An amount of the organometallic compound larger than the aforementioned amount is undesirable, because side reactions of the organometallic compound occur. An amount less than the aforementioned lower limit is undesirable, because siloxane of the formula (iii) or (iv) may be left unreacted.

The above reaction may be carried out by a method known in the art. For example, an organometallic compound in an amount up to one molar equivalent may be added to a compound of the formula (iii) or (iv) to cause a reaction, followed by the addition of hexamethylcyclotrisiloxane for a further reaction. For example, the reaction of 2,4,6,8-tetramethyl-2,4,6,8-tetra(N,N-dimethylamino propyl) cyclotetrasiloxane with BuLi forms BuMe(C₃H₆NMe₂)SiOLi. Then, this product may be used as an initiator for ring-opening reaction with hexamethylcyclotrisiloxane to form a compound of the formula (8') shown above. Further, a halogenated silyl compound of the formula (7) is added for a further reaction to obtain a silicone compound of the formula (I). The addition of the organometallic compound, hexamethylcyclotrisiloxane, and the halogenated silyl compound may be typically carried out at a temperature of from about 0°C to about 40°C. There is no particular limitation on the reaction temperature, but it is preferable that the temperature does not exceed a boiling point of the solvent used. The completion of the reaction with hexamethylcyclotrisiloxane may be confirmed, after the dropwise addition and aging at an elevated temperature, by checking the presence or absence of hexamethylcyclotrisiloxane, e.g., by the disappearance of its peak by GC measurement. By confirming the completion of the reaction by the GC measurement, a silicone compound of higher purity, free of residual hexamethylcyclotrisiloxane, can be obtained.

Any of the above reactions may be carried out in the presence of a solvent. There is no particular limitation with regard to the solvent, and a hydrocarbon solvent, such as hexane and heptane; an aromatic solvent, such as toluene; an ether solvent, such as tetrahydrofuran; a ketone solvent, such as methyl ethyl ketone and N,N-dimethylformamide; and an ester solvent, such as ethyl acetate, may be suitably used.

After completion of the reaction, purification may be carried out in a conventional method known in the art. For example, the organic layer may be washed with water, followed by removal of the solvent to isolate the product. It is also possible to use vacuum distillation or activated carbon treatment.

The Production Method A according to the invention will be described below in more detail.

### A-I)

One embodiment of the Production Method A according to the invention is a method comprising:
reacting a siloxane of the following formula (8'): 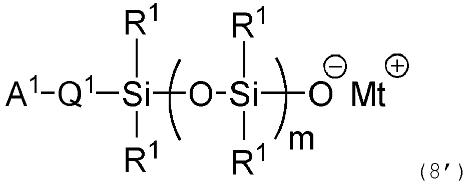 wherein R¹, Q¹, "m" and Mt are as defined above, and A¹ is a functional group that is unreactive with an organometallic compound;
   with a halogenated silyl compound of the following formula (7): 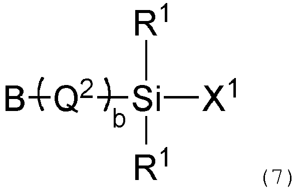 wherein R¹ and Q² are as defined above, X¹ is a halogen atom, B is a hydrogen atom, or a functional group that is radically polymerizable, a functional group or atom that is reactive with an organometallic compound, or a functional group that is unreactive with an organometallic compound and that is different from A¹, "b" is 0 or 1, with a proviso that "b" is 0 when B is hydrogen atom; to obtain a silicone compound represented by the general formula (Ia) shown below: 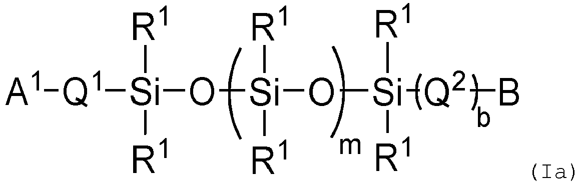 wherein R, A¹, Q¹, Q², B, "b" and "m" are as defined above.
The conditions for the reaction between the siloxane of the formula (8') and the halogenated silyl compound are as described above. This process yields a silicone compound having at one terminal a functional group that is unreactive with an organometallic compound and at the other terminal another functional group.

### A-II)

A second embodiment of the Production Method A according to the invention is a method comprising:
preparing, by a process described above in A-I), a silicone compound having a functional group that is unreactive with an organometallic compound at one terminal and a SiH group at the other terminal, as represented by the following formula (Ia-1): 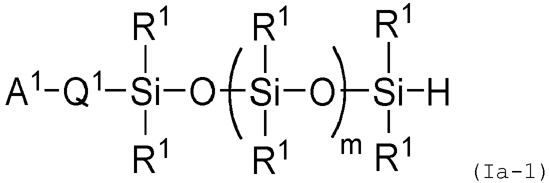
followed by an addition reaction of the compound of the formula (Ia-1) with a compound having a terminal vinyl group of the following formula (v):

   CH₂=CH-Q³-B² (vi)

   wherein Q³ is a single bond or a substituted or unsubstituted, divalent hydrocarbon group having 1 to 18 carbon atoms, which may comprise one or more bonds selected from the group consisting of an amide bond, an ether bond, an ester bond, a urethane bond and an unsaturated bond; and B² is a functional group that is radically polymerizable, a functional group or atom that is reactive with an organometallic compound, or a functional group that is unreactive with an organometallic compound and that is different from A¹ in the formula (Ia-1) ;
   to obtain a silicone compound of the following formula (Ib) 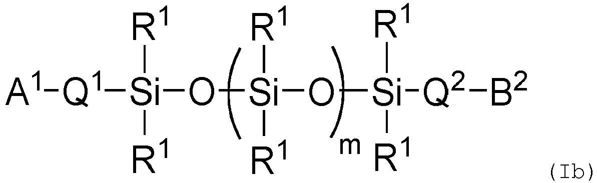 wherein R¹, A¹, Q¹, Q², B² and "m" are as defined above.
This production method yields a silicone compound having at one terminal (A¹) a functional group that is unreactive with an organometallic compound and at the other terminal (B¹) a functional group that is radically polymerizable, a functional group or atom that is reactive with an organometallic compound, or a functional group that is unreactive with an organometallic compound and that is different from A¹.

Examples of the compound of the formula (vi) include 2-allyloxyethanol (allylglycol), allylamine, allyloxyethyl methacrylate, diethylene glycol allyl methyl ether, dimethylallylamine, allyl glycidyl ether, 3-butenoic acid, and allyl isocyanate and the like. It may also contain an acidic functional group or a basic functional group other than those listed above.

The addition reaction with the compound of the formula (vi) may be carried out without using a reaction solvent, but preferably using a reaction solvent. Examples of the solvent include an aliphatic hydrocarbon solvent, such as hexane, methylcyclohexane and ethylcyclohexane; an aromatic hydrocarbon solvent, such as toluene and xylene; an alcohol solvent, such as ethanol and isopropyl alcohol; an ester solvent, such as ethyl acetate and butyl acetate; an ether solvent, such as dioxane, dibutyl ether and dimethoxyethane; a ketone solvent, such as methyl isobutyl ketone; and a chlorine solvent, such as chloroform, and the like. In particular, an aromatic hydrocarbon such as toluene is most suitable. The amount of the solvent is not particularly limited, and may be adjusted appropriately.

The addition reaction may be preferably carried out in the presence of a hydrosilylation catalyst. The hydrosilylation catalyst may be any catalyst known in the art. For example, a noble metal catalyst, particularly a platinum catalyst derived from chloroplatinic acid may be suitably used. In particular, it is preferable to improve the stability of the platinum catalyst by fully neutralizing chlorine ion of chloroplatinic acid with sodium bicarbonate. The amount of the catalyst to be added may be any catalytic amount to promote the addition reaction. The temperature of the addition reaction is not particularly limited, and may be adjusted appropriately. In particular, a temperature in the range of from 20°C to 150°C, more preferably from 50°C to 120°C, may be used. The reaction period may be, for example, 1 to 12 hours, preferably 3 to 8 hours.

The amount of the compound of the formula (vi) is preferably an excess molar amount with respect to the compound of the general formula (Ia-1). For example, the compound of the formula (vi) may be used in an amount of from 1.01 to 3 moles, preferably from 1.05 to 2 moles, more preferably from 1.1 to 1.5 moles, per mole of the compound of the general formula (Ia-1).

### A-III)

A third embodiment of the Production Method A according to the invention is a method comprising:
preparing, by a process described above in A-I), a silicone compound having an OP group (wherein P is a protecting group for hydroxyl group) at one terminal, as represented by the following formula (Ia-2): 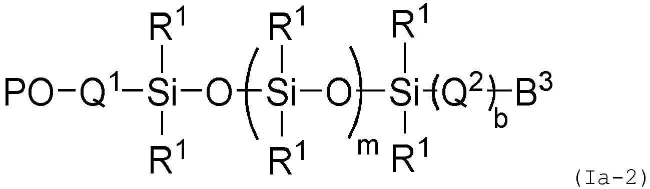 wherein R¹, Q¹, Q², "b" and "m" are as defined for (1b); B³ is a hydrogen atom, a functional group that is reactive with an organometallic compound, or a functional group that is unreactive with an organometallic compound, "b" is 0 or 1, with a proviso that "b" is 0 when B³ is a hydrogen atom; and P is a protecting group for hydroxyl group, such as a trimethylsilyl group, a benzyl group and the like; and
removing the protecting group P from the composition of the formula (Ia-2) to obtain a compound of the following formula (Ia-3) : 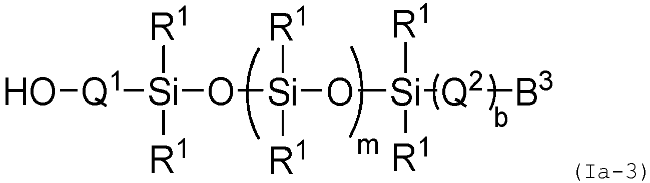 wherein R¹, Q¹, Q², "m", B³ and "b" are as defined above. The removal of the protecting group may be carried out in any method known in the art.

Further, a compound of the formula (Ia-3) as indicated above may be reacted with a halogen compound having a radically polymerizable functional group at a terminal, such as (meth) acrylic acid chloride, to obtain a compound of the following formula (Ic): 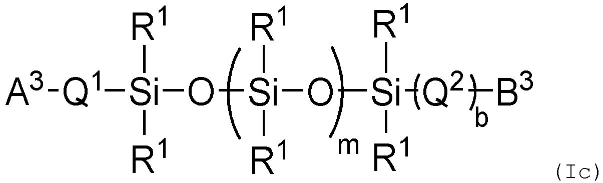 wherein R¹, Q¹, Q², "m", B³ are as defined above; and A³ is a functional group that is radically polymerizable. This reaction may be carried out in any method known in the art.
This production method yields a silicone compound having a radically polymerizable functional group at one terminal and another functional group at the other terminal.

### A-IV)

A fourth embodiment of the Production Method A according to the invention is a method comprising preparing, by a process described above in A-I) or A-II), a silicone compound having at one terminal a protected functional group such as a silylated hydroxyl group, a benzylated hydroxyl group, a silylated 1,2-ethanediol group, a benzylated 1,2-ethanediol group, or a benzylated tertiary amino group; and removing the protecting group from the functional group. This production method yields a silicone compound having at one terminal (A) a functional group that is reactive with an organometallic compound and at the other terminal (B) a hydrogen atom, a functional group that is radically polymerizable, a functional group that is unreactive with an organometallic compound, or a functional group or atom that is reactive with an organometallic compound and that is different from A.

Removal of the protective group may be carried out in any method known in the art. For example, the silyl group may be removed in the presence of water or an alcohol, preferably, in an alcohol. For example, methanol, ethanol, isopropyl alcohol, 1-propanol, isobutanol, and 1-butanol, may be suitably used. Isopropyl alcohol is particularly preferable. The reaction may be carried out in the presence of an acid or a base. There is no particular limitation with regard to the acid catalyst, and any catalyst conventionally used for desilylation may be used, including, for example, acetic acid, acrylic acid, p-nitrobenzoic acid, fumaric acid, and a solid acid catalyst in the form of a carboxylic acid. In particular, acetic acid is most preferred. The amount of the acid catalyst, the reaction temperature and the like are not particularly limited, and may be determined in accordance with conventionally known methods.

More specifically, in an exemplary production method according to the invention, a siloxane of the formula (iii) or (iv) is diluted with 50% by mass of toluene, and then 1 molar equivalent of n-butyllithium (n-hexane solution) is added. Subsequently, hexamethylcyclotrisiloxane dissolved in 200% by mass of tetrahydrofuran is added. The reaction terminates after reacting at room temperature for about 3 hours. At that time, progress of the reaction may be confirmed by monitoring hexamethylcyclotrisiloxane by GC measurement and the like. After the reaction with hexamethylcyclotrisiloxane, 1 molar equivalent of the silyl halide compound is added, and allowed to be reacted at room temperature for about 1 hour until completion. After the completion of the reaction, the organic layer is washed with water, and the organic layer is recovered when the pH of the washing solution becomes near neutral (pH = 6-8). The solvent and any unreacted raw material that may be present in the organic layer are distilled off under reduced pressure, to yield a silicone compound of the formula (I) indicated above.

The present invention further provides a silicone compound having an amino group at one terminal and another functional group at the other terminal, as represented by the formula (1) shown below, and a method for preparing the same (Production Method B). 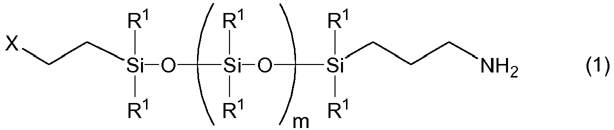 wherein "m" is an integer in the range of from 1 to 300, preferably in the range of from 2 to 200, more preferably in the range of from 3 to 100, and especially in the range of 1 to 6; R¹ is, independently at each occurrence, a substituted or unsubstituted, saturated or unsaturated, monovalent hydrocarbon group having 1 to 10 carbon atoms, in particular a substituted or unsubstituted hydrocarbon group having 1 to 6 carbon atoms; X is an organic functional group having 0 to 48 carbon atoms represented by -Q⁴B' wherein Q⁴ is a single bond or a substituted or unsubstituted, divalent hydrocarbon group having 1 to 18 carbon atoms, which may comprise one or more bonds selected from the group consisting of an amide bond, an ether bond, an ester bond, a urethane bond and an unsaturated bond; and B' is a functional group that is unreactive with an organometallic compound, a functional group that is radically polymerizable, or a functional group that is reactive with an organometallic compound.

The silicone compound having a terminal amino group and another terminal functional group represented by the general formula (1) may be prepared by desilylation reaction of a compound of the following formula (4): 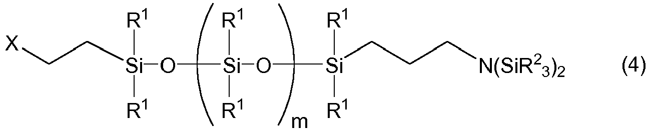 wherein "m", X and R¹ are as defined above ; and R² is a C₁₋₃ alkyl group.

The compound of the formula (4) may be prepared by an addition reaction of a hydrogensilicone of the general formula (3) : 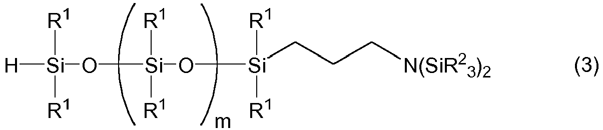 wherein "m", R¹ and R² are as defined above;
with a compound having both an organic functional group and a double bond, as represented by the formula (5) shown below:

CH₂=CH-X (5)

wherein X is as defined above.

The compound of the formula (3) may be prepared by an addition reaction at one terminal Si-H of a dihydrogenpolysiloxane of the general formula (2) shown below: 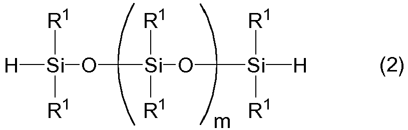 wherein "m" and R¹ are as defined above,
with a bis(tri-C₁₋₃-alkylsilyl)allylamine of the formula (6):

CH₂=CHCH₂N(SiR²₃)₂ (6)

wherein R² is as defined above.

The Production Method B will be described below in more detail.

### B-i) Preparation of a silicone having terminal amino group and another terminal functional group

In the general formula (1) according to the invention, it is particularly preferable that "m" is an integer of from 1 to 6, and more preferably an integer of from 2 to 5. If "m" is larger than the upper limit, the purification by distillation may become difficult. Preferably, R¹ is, independently at each occurrence, a substituted or unsubstituted hydrocarbon group having 1 to 6 carbon atoms, including, for example, an alkyl group, such as methyl, ethyl, propyl, isopropy, butyl, and hexyl; an aryl group such as phenyl group; and a group in which a part or all of the hydrogen atoms of these groups are substituted with a fluorine atom, such as trifluoropropyl group. X is an organic functional group having 0 to 48 carbon atoms, including, for example, an organic functional group selected from hydroxyl group, an alkoxy group such as methoxy and ethoxy, an alkenyl group such as vinyl and allyl, a secondary amino group, a tertiary amino group, a quaternary ammonium group, a halogen atom, a nitro group, an azide group, an epoxy group, an arylalkenyl groups such as styryl group, a phenol group, a thiol group, a carboxyl group, and a C₁-C₄₈ alkyl group substituted with any of these groups, in which the alkyl group may include one or more heteroatoms, such as oxygen or sulfur atom, interrupting the carbon-carbon linkage. For example, a C₁-C₄₈ alkyl group may include one or more oxygen atoms interrupting the carbon-carbon linkage, to form a mono- or poly-ether. The C₁-C₄₈ alkyl group is preferably a C₁-C₂₄ alkyl group. Examples of the substituent group include a halogen atom such as fluorine, bromine and chlorine, and a cyano group.

In the general formula (4), R² is the same or different and is, independently at each occurrence, an alkyl group having 1 to 3 carbon atoms, including, for example, methyl group, ethyl group and propyl group.

The method for preparing a silicone having a terminal amino group and another terminal functional group as represented by the general formula (1) involves desilylation of a compound of the general formula (4).

According to the production method of the invention, the target compound of the general formula (1) can be produced with a high purity, by subjecting a compound of the general formula (4) to the action of an acid, causing selective desilylation of the silyl group with a minimum cleavage of the siloxane chain.

The desilylation reaction may be carried out in alcohol or water, preferably in alcohol. The amount of alcohol may be suitably adjusted, without any particular restriction. For example, the amount may be from half to twice the mass of the silicone precursor having a terminal amino group and another terminal functional group, and more preferably, substantially the same as the amount of the silicone precursor having a terminal amino group and another terminal functional group. Exemplary alcohols that may be suitably used include methanol, ethanol, isopropyl alcohol, 1-propanol, isobutanol, 1-butanol and the like. In particular, isopropyl alcohol is preferred.

The desilylation reaction may be preferably carried out in the presence of an acid catalyst. There is no particular limitation with regard to the acid catalyst, and any catalyst conventionally used for desilylation may be used. In order to suppress cleavage of the siloxane chain, it is particularly preferable to use a weak acid having an acid dissociation constant (pKa) of at least 2.0 in water. Specific examples thereof include acetic acid, acrylic acid, p-nitrobenzoic acid, fumaric acid, and a solid acid catalyst in the form of a carboxylic acid. In particular, acetic acid is most preferred. There is no particular limitation with regard to the amount of the acid catalyst. When a weak acid such as acetic acid is used, for example, it is preferably used in an amount of 0.1 to 5.0% by mass, preferably 0.5 to 2.0% by mass, based on the silicone precursor having a terminal amino group and another terminal functional group.

The desilylation reaction may be carried out at room temperature, although a large amount of acid is required to complete the reaction. It is therefore preferable to conduct the desilylation at an elevated temperature, using a relatively small amount of acid. Reaction conditions for the desilylation are not particularly limited, and may be any conventional conditions known in the art. The reaction temperature may be, for example, a temperature in the range of 40 to 100°C, preferably in the range of 50 to 80°C. If the temperature is lower than this, a large amount of acid may be required to complete the reaction, possibly causing a decreased reaction efficiency and cleavage of the siloxane chain. If the temperature is higher than this, the purity and yield of the product may be decreased due to cleavage of the siloxane chain and alcohol evaporation. The reaction period may range, for example, from 0.5 to 48 hours, preferably from 1 to 6 hours.

In an exemplary production method according to the invention, a siloxane of the general formula (4) is diluted with the same mass of isopropyl alcohol, and then acetic acid is added in an amount of 1.0% by mass based on the silicone of the general formula (4). The desilylation reaction terminates after stirring at 80°C for 3 hours. In case where the resulting silicone having a terminal amino group and another terminal functional group is of a low molecular weight, the completion of the reaction may be confirmed by a GC (gas chromatography) measurement. In case where the resulting silicone having a terminal amino group and another terminal functional group is of a high molecular weight, the completion of the reaction may be confirmed by checking via GC measurement the amount of a silylated isopropyl alcohol that is formed by the reaction. A prolonged heating after the completion of the reaction is undesirable, because it may decrease the purity of the desired silicone having a terminal amino group and another terminal functional group. When the reaction is confirmed to be completed, hydrotalcite (KYOWAAD(R) 500, Kyowa Chemical Industry Co., Ltd.) is added to the reaction mixture in an amount of five times the mass of the acid used, followed by stirring at room temperature for 1 hour to neutralize the acid. Then, hydrotalcite is removed by filtration through a filter paper, and then isopropyl alcohol that has acted as a solvent is distilled off from the filtrate under reduced pressure, to yield silicone of the general formula (1) which has a terminal amino group and another terminal functional group. This process is very convenient, and provides a silicone having a terminal amino group and another terminal functional group with a high purity.

As already noted above, the term "high purity" as used herein indicates that a compound having a specific structure (that is, "m" is a specific integer, and X, R¹, R² and R³ each denotes one specific group) shows a peak area of 90% or more, preferably 95% or more, in a GPC or GC chromatogram.

### B-ii) Preparation of a precursor of a silicone having a terminal amino group and another terminal functional group

Next, a method for producing a compound of the formula (4), a precursor material of the silicone having a terminal amino group and another terminal functional group of the formula (1), will be described. The compound of the formula (4) may be prepared by an addition reaction of a hydrogensilicone of the general formula (3) : 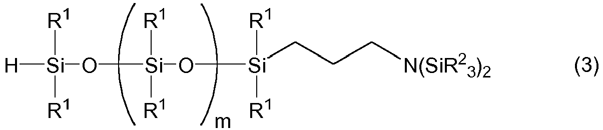 wherein "m", R¹ and R² are as defined above;
with a compound having both an organic functional group and a double bond, as represented by the formula (5) shown below:

CH₂=CH-X (5)

wherein X is as defined above.

Examples of the compound having both an organic functional group and a double bond represented by the formula (5), include 2-allyloxyethanol(allylglycol), diethylene glycol allylmethyl ether, dimethylallylamine, allyl chloride, allyl glycidyl ether, 3-butenoic acid and the like. It may also contain an acidic functional group or a basic functional group other than those listed above. By this method, a compound of the general formula (4) can be prepared with ease and with a high purity.

This addition reaction may be carried out without using a reaction solvent, but it is preferable to use a reaction solvent. Examples of the solvent include an aliphatic hydrocarbon solvent, such as hexane, methylcyclohexane and ethylcyclohexane; an aromatic hydrocarbon solvent, such as toluene and xylene; an alcohol solvent such as ethanol and isopropyl alcohol; an ester solvent, such as ethyl acetate and butyl acetate; an ether solvent, such as dioxane, dibutyl ether and dimethoxyethane; a ketone solvent, such as methyl isobutyl ketone; a chlorine solvent such as chloroform, and the like. In particular, an aromatic hydrocarbon such as toluene is most preferred. The amount of the solvent is not particularly limited, and may be adjusted appropriately.

This addition reaction may be preferably carried out in the presence of a hydrosilylation catalyst. The hydrosilylation catalyst may be any catalyst known in the art. For example, a noble metal catalyst, particularly a platinum catalyst derived from chloroplatinic acid may be suitably used.

It is preferable to improve the stability of the platinum catalyst by fully neutralizing chlorine ion of chloroplatinic acid with sodium bicarbonate. For example, a complex of 1,1,3,3-tetramethyl-1,3-divinyldisiloxane and chloroplatinic acid neutralized with sodium bicarbonate (Karstedt catalyst) is most suitable as the reaction catalyst.

The amount of the hydrosilylation catalyst to be added may be any catalytic amount to promote the addition reaction. For example, a complex of 1,1,3,3-tetramethyl-1,3-divinyldisiloxane and chloroplatinic acid neutralized with sodium bicarbonate may be used in an amount of 5 ppm to 80 ppm of platinum, calculated based on the mass of the compound of the general formula (3). Too little amount of the catalyst may undesirably slow the reaction rate. On the other hand, an excessive amount of the catalyst is undesirable, because it makes the process uneconomical with no particular improvement in the reaction rate being achieved.

The temperature of the addition reaction is not particularly limited, and may be adjusted appropriately. In particular, a temperature in the range of from 20°C to 150°C, and more preferably from 50°C to 120°C, may be used. All materials for the reaction may be charged together and allowed to react at once. However, it is more preferable to carry out the reaction by charging a compound of the formula (5), a reaction solvent and a hydrosilylation catalyst into a reactor, followed by dropwise addition of a compound of the general formula (3). It is particularly preferable that the temperature of the reaction mixture during the dropwise addition is around 80°C to 90°C. The reaction period may be, for example, 1 to 12 hours, preferably 3 to 8 hours.

The compound having both an organic functional group and a double bond of the formula (5) is preferably used in a molar excess relative to the compound of the general formula (3), for example, from 1.01 to 3 moles, preferably from 1.05 to 2 moles, more preferably from 1.1 to 1.5 moles per mole of the compound of the general formula (3) .

After the dropwise addition of the compound of the general formula (3), the reaction mixture may be aged, e.g., at 80 to 90°C for 2 hours, and then checked for the presence of any unreacted compound of the general formula (3), e.g., by the disappearance of its peak by gas chromatography (GC) measurement. Then, a reaction solvent such as toluene and unreacted compound of the formula (5) charged in excess may be stripped at an internal temperature of 130°C, to yield a compound of the general formula (4) with a high purity.

### B-iii) Production of hydrogen silicone

Next, a method for producing a hydrogen silicone compound of the formula (3) shown above will be described. The compound of the formula (3) may be prepared by an addition reaction of a dihydrogenpolysiloxane of the general formula (2): 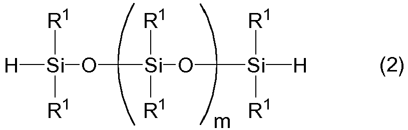 wherein "m" and R¹ are as defined above,
with a bis(tri-C₁₋₃-alkylsilyl)allylamine of the formula (6):

CH₂=CHCH₂N(SiR²₃)₂ (6)

wherein R² is as defined above.

This addition reaction may be preferably carried out under reaction conditions as already described in the section "B-ii) Preparation of a precursor of a silicone having a terminal amino group and another terminal functional group" above.

By subjecting the adduct thus obtained to rectification, a compound of the formula (3) may be obtained. By this method, a compound of the general formula (3) can be prepared with ease and with a high purity.

The present silicone compound is able to have different functional groups at terminals and to have sufficient siloxane content. Therefore, the silicone compound of the invention is useful in the fields of resin modifiers and medical device materials, in particular, as materials for ophthalmic devices. In particular, a silicone compound having a radically polymerizable functional group at one terminal (either at A or B) in the above formula (I) can form a polymer having a repeating unit derived by radical polymerization. The silicone compound has good compatibility with another compound (hereinafter referred to as a polymerizable monomer or a hydrophilic monomer) having a group, such as (meth)acryl group, that is polymerizable with the radically polymerizable functional group of the silicone compound. Therefore, the silicone may be copolymerized with a polymerizable monomer to provide a colorless and transparent copolymer. It is also possible to polymerize the silicone alone. A silicone compound having a radical polymerizable functional group is particularly suitable as a monomer for manufacturing an ophthalmic device.

Examples of the polymerizable monomer include acrylic monomers, such as (meth)acrylic acid, methyl(meth)acrylate, ethyl(meth)acrylate, (poly)ethylene glycol dimethacrylate, polyalkylene glycol mono(meth)acrylate, polyalkylene glycol monoalkylether(meth)acrylate, trifluoroethyl(meth)acrylate, 2-hydroxyethyl(meth)acrylate, 2,3-dihydroxypropyl(meth)acrylate; acrylic acid derivatives, such as N,N-dimethyl acrylamide, N,N-diethyl acrylamide, N-acryloyl morpholine, N-methyl (meth)acrylamide; other unsaturated aliphatic and aromatic compounds, such as crotonic acid, cinnamic acid, vinyl benzoic acid; and silicone monomers having one or more polymerizable groups such as (meth) acryl group. The monomer may be used alone or in combination of two or more monomers.

Copolymerization of the present compound with other polymerizable monomer(s) as described above may be carried out by any method known in the art. For example, it may be carried out using a polymerization initiator known in the art, such as a thermal polymerization initiator or a photopolymerization initiator. Examples of the polymerization initiator include 2-hydroxy-2-methyl-1-phenyl-propan-1-on, azobisisobutyronitrile, azobisdimethylvaleronitrile, benzoyl peroxide, tert-butyl hydroperoxide, and cumene hydroperoxide. The polymerization initiator may be used alone or in combination of two or more initiators. The amount of the polymerization initiator may be from 0.001 to 2 parts by mass, preferably from 0.01 to 1 part by mass, based on 100 parts by mass of the total polymerizable components.

A (co)polymer comprising a repeating unit derived from the present silicone compound has sufficient siloxane content so as to provide excellent oxygen permeability. Accordingly, the present silicone compound is suitable for manufacturing ophthalmic devices such as contact lenses, intraocular lenses and artificial corneas. There is no particular limitation with respect to a method for preparing an ophthalmic device using the polymer, and any conventional method known in the art for manufacturing ophthalmic devices may be used. For example, a machining process and a molding process may be used for forming a lens shape such as a contact lens and an intraocular lens.

### EXAMPLES

The present invention will be illustrated in more detail with reference to the following Examples and Comparative Examples, which should not be construed as limiting the present invention.

### [Examples A1-A22]

### (Production Method A)

In Examples A1 to A11 below, viscosities were measured with a *Cannon-Fenske viscometer, and specific gravities were measured with* a hydrometer. Refractive indices were measured with a digital refractometer RX-5000 (Atago Co. Ltd.) . ¹H-NMR analysis was conducted with JNM-ECP5000 (JEOL Ltd.), using deuterochloroform as a solvent for measurement.

### [Example A1](Production Method A-I)

A 3-liter three-neck eggplant flask equipped with a Dimroth condenser, a thermometer and a dropping funnel was charged with 92.4 g of 2,4,6,8-tetramethyl-2,4,6,8-tetra(N,N-dimethylaminopropyl) cyclotetrasiloxane, followed by dropwise addition of 294.0 g of a solution of n-butyllithium in hexane from the dropping funnel. After the dropwise addition, the reaction solution was stirred at room temperature for 1 hour. Completion of the reaction was confirmed by disappearance of the starting material in gas chromatography (GC). After the completion of the reaction, 776.0 g of hexamethylcyclotrisiloxane, 776.0 g of toluene and 36.4 g of DMF were added and stirred at 40°C for 4 hours. Completion of the reaction was confirmed by disappearance of hexamethylcyclotrisiloxane in gas chromatography (GC). After the completion of the reaction, 159.5 g of methacryloyloxypropyldimethylchlorosilane, 3.50 g of triethylamine and 0.25 g of 2, 6-di-t-butyl-4-methylphenol were added and stirred at room temperature for 1 hour. After the completion of the reaction, the organic layer was transferred to a separatory funnel and washed five times with tap water. The organic layer was recovered, and the solvent and unreacted raw materials were distilled off under reduced pressure at an internal temperature of 90°C to obtain a silicone compound of the formula (9) shown below. The yield was 845.6 g. The ¹H-NMR data were as follows:
0.0 ppm (45H), 0.6 ppm (6H), 0.9 ppm (3H), 1.3 ppm (4H), 1.5 ppm (2H), 1.7 ppm (2H), 2.0 ppm (3H), 2.2 ppm (8H), 4.1 ppm (2H), 5.5 ppm (1H), 6.1 ppm (1H).

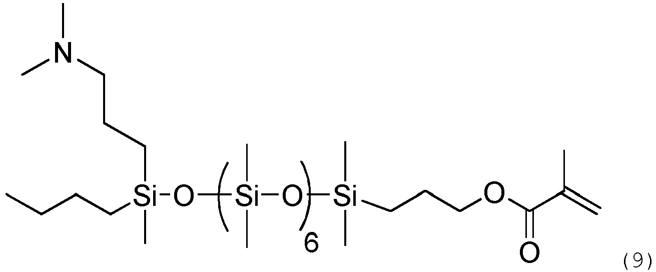

### [Example A2] (Production Method A-I)

The procedures of Example A1 were repeated, except that 2,4,6,8-tetramethyl-2,4,6,8-tetra(N,N-bistrimethylsilylaminopropyl)cyclotetrasiloxane was used in place of 2,4,6,8-tetramethyl-2,4,6,8-tetra(N,N-dimethylaminopropyl) cyclotetrasiloxane to obtain a silicone compound of the formula (10) shown below. The yield was 863.6 g. The ¹H-NMR data were as follows: 0.0 ppm (63H), 0.6 ppm (6H), 0.9 ppm (3H), 1.3 ppm (4H), 1.5 ppm (2H), 1.7 ppm (2H), 2.0 ppm (3H), 2.2 ppm (2H), 4.1 ppm (2H), 5.5 ppm (1H), 6.1 ppm (1H).

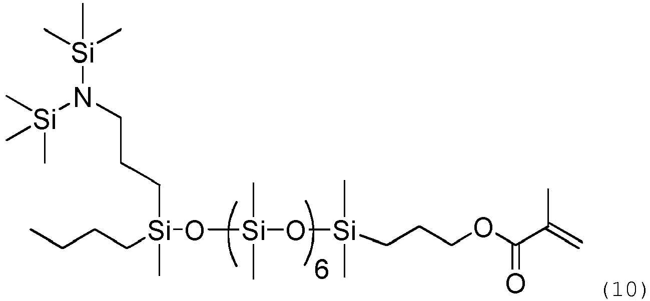

### [Example A3] (Production Method A-I)

The procedures of Example A1 were repeated, except that 2,4,6,8-tetramethyl-2,4,6,8-tetra(polyethyleneoxidepropyl) cyclotetrasiloxane was used in place of 2,4,6,8-tetramethyl-2,4,6,8-tetra(N,N-dimethylaminopropyl) cyclotetrasiloxane to obtain a silicone compound of the formula (11) shown below. The yield was 894.1 g. The ¹H-NMR data were as follows: 0.0 ppm (45H), 0.6 ppm (6H), 0.9 ppm (3H), 1.3 ppm (4H), 1.5 ppm (2H), 1.7 ppm (2H), 2.0 ppm (3H), 3.3-3.7 ppm (21H), 4.1 ppm (2H), 5.5 ppm (1H), 6.1 ppm (1H).

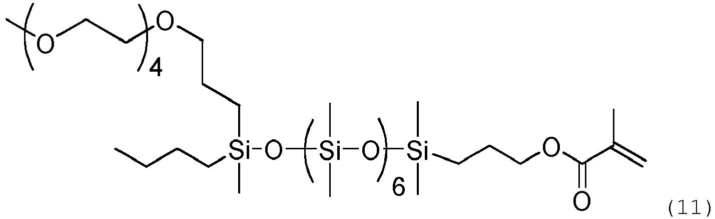

### [Example A4] (Production Method A-I)

The procedures of Example A1 were repeated, except that 2,4,6,8-tetramethyl-2,4,6,8-tetra(trimethylsilylpropyleneglycol) cyclotetrasiloxane was used in place of 2,4,6,8-tetramethyl-2,4,6,8-tetra(N,N-dimethylaminopropyl) cyclotetrasiloxane to obtain a silicone compound of the formula (12) shown below. The yield was 840.0 g. The ¹H-NMR data were as follows: 0.0 ppm (54H), 0.6 ppm (6H), 0.9 ppm (3H), 1.3 ppm (4H), 1.5 ppm (2H), 1.7 ppm (2H), 2.0 ppm (3H), 2.2 ppm (1H), 3.3-3.7 ppm (6H), 4.1 ppm (2H), 5.5 ppm (1H), 6.1 ppm (1H) .

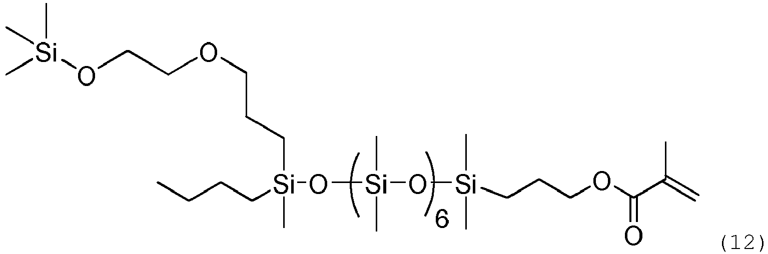

### [Example A5] (Production Method A-I)

The procedures of Example A1 were repeated, except that 2,4,6,8-tetramethyl-2,4,6,8-tetra(benzylpropyleneglycol) cyclotetrasiloxane was used in place of 2,4,6,8-tetramethyl-2,4,6,8-tetra(N,N-dimethylaminopropyl) cyclotetrasiloxane to obtain a silicone compound of the formula (13) shown below. The yield was 865.6 g. The ¹H-NMR data were as follows: 0.0 ppm (45H), 0.6 ppm (6H), 0.9 ppm (3H), 1.3 ppm (4H), 1.5 ppm (2H), 1.7 ppm (2H), 2.0 ppm (3H), 3.3-3.7 ppm (6H), 4.1 ppm (2H), 4.4 ppm (2H), 5.5 ppm (1H), 6.1 ppm (1H), 7.2-7.3 ppm (5H).

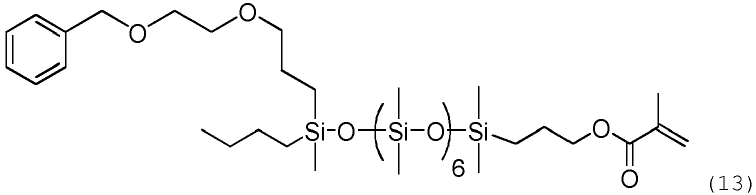

### [Example A6] (Production Method A-I)

The procedures of Example A1 were repeated, except that 2,4,6,8-tetramethyl-2,4,6,8-tetravinylcyclotetrasiloxane was used in place of 2,4,6,8-tetramethyl-2,4,6,8-tetra(N,N-dimethylamino propyl)cyclotetrasiloxane to obtain a silicone compound of the formula (14) shown below. The yield was 813.1 g. The ¹H-NMR data were as follows:
0.0 ppm (45H), 0.6 ppm (4H), 0.9 ppm (3H), 1.3 ppm (4H), 1.7 ppm (2H), 2.0 ppm (3H), 4.1 ppm (2H), 5.5 ppm (1H), 5.7 ppm (1H), 5.9 ppm (1H), 6.0 ppm (1H), 6.1 ppm (1H).

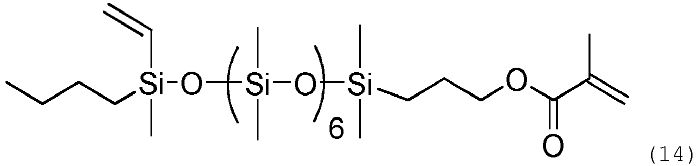

### [Example A7] (Production Method A-I)

The procedures of Example A1 were repeated, except that dimethylchlorosilane was used in place of methacryloyloxypropyl dimethylchlorosilane to obtain a silicone compound of the formula (15) shown below. The yield was 723.2 g. The ¹H-NMR data were as follows:
0.0 ppm (45H), 0.6 ppm (4H), 0.9 ppm (3H), 1.3 ppm (4H), 1.5 ppm (2H), 2.2 ppm (8H), 4.7 ppm (1H).

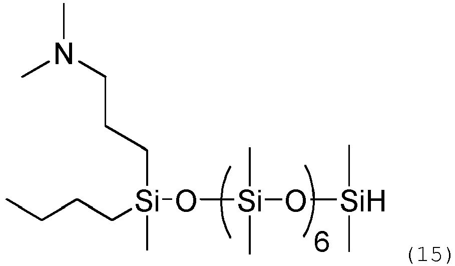

### [Example A8] (Production Method A-I)

The procedures of Example A2 were repeated, except that dimethylchlorosilane was used in place of methacryloyloxypropyl dimethylchlorosilane to obtain a silicone compound of the formula (16) shown below. The yield was 753.6 g. The ¹H-NMR data were as follows:
0.0 ppm (63H), 0.6 ppm (4H), 0.9 ppm (3H), 1.3 ppm (4H), 1.5 ppm (2H), 2.2 ppm (2H), 4.7 ppm (1H).

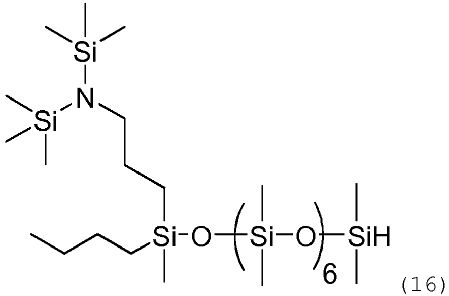

### [Example A9] (Production Method A-I)

The procedures of Example A5 were repeated, except that dimethylchlorosilane was used in place of methacryloyloxypropyl dimethylchlorosilane to obtain a silicone compound of the formula (17) shown below. The yield was 750.0 g. The ¹H-NMR data were as follows:
0.0 ppm (45H), 0.6 ppm (4H), 0.9 ppm (3H), 1.3 ppm (4H), 1.5 ppm (2H), 3.3-3.7 ppm (6H), 4.4 ppm (2H), 4.7 ppm (1H), 7.2-7.3 ppm (5H).

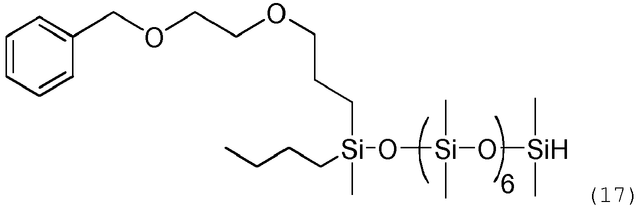

### [Example A10](Production Method A-II)

A 500 mL three-neck eggplant flask equipped with a Dimroth condenser, a thermometer and a dropping funnel was charged with 100.0 g of the compound of the formula (15) as obtained in Example A7 and 50.0 g of toluene, and then warmed to 80°C. To the flask was added 0.1 g of a toluene solution of a vinylsiloxane complex of chloroplatinic acid neutralized with sodium bicarbonate (platinum content: 0.5%), followed by dropwise addition of 20.0 g of allylglycol from the dropping funnel. After the dropwise addition, the reaction solution was aged at 80 to 90°C for 2 hours. Toluene and excess allylglycol were distilled off under reduced pressure at an internal temperature of 130°C to obtain 106.2 g of a silicone compound of the formula (18) shown below. The ¹H-NMR data were as follows:
0.0 ppm (45H), 0.6 ppm (6H), 0.9 ppm (3H), 1.3 ppm (4H), 1.5 ppm (4H), 2.2 ppm (8H), 3.3-3.7 ppm (21H).

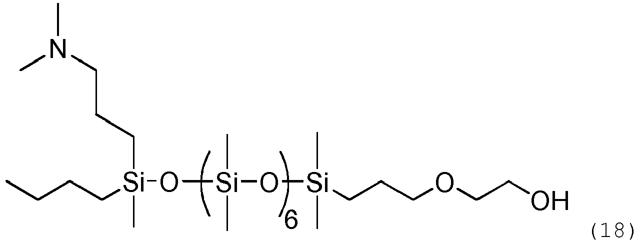

### [Example A11] (Production Method A-II)

The procedures of Example A10 were repeated, except that allylamine was used in place of allylglycol to obtain a silicone compound of the formula (19) shown below. The yield was 105.5 g. The ¹H-NMR data were as follows:
0.0 ppm (45H), 0.6 ppm (6H), 0.9 ppm (3H), 1.3 ppm (4H), 1.5 ppm (4H), 2.2 ppm (10H).

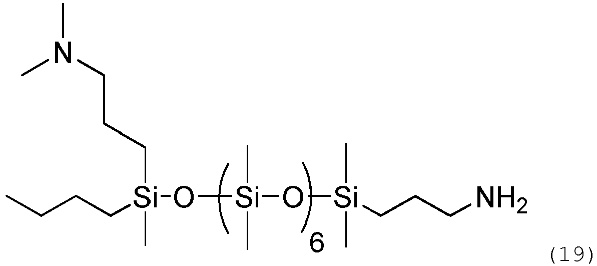

### [Example A12] (Production Method A-II)

The procedures of Example A10 were repeated, except that allyloxyethyl methacrylate was used in place of allylglycol to obtain a silicone compound of the formula (9) shown below. The yield was 108.2 g. The ¹H-NMR data were as follows:
0.0 ppm (45H), 0.6 ppm (6H), 0.9 ppm (3H), 1.3 ppm (4H), 1.5 ppm (2H), 1.7 ppm (2H), 2.0 ppm (3H), 2.2 ppm (8H), 4.1 ppm (2H), 5.5 ppm (1H), 6.1 ppm (1H).

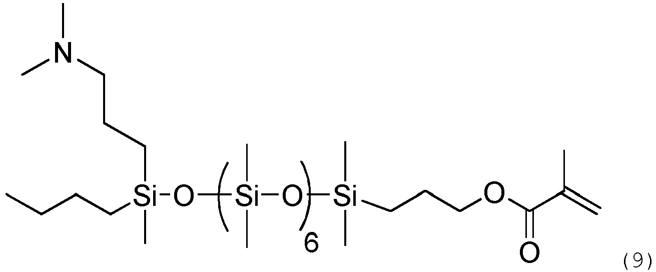

### [Example A13] (Production Method A-II)

The procedures of Example A10 were repeated, except that the compound of the formula (16) as obtained in Example A8 was used in place of the compound of the formula (15) to obtain a silicone compound of the formula (20) shown below. The yield was 109.7 g. The ¹H-NMR data were as follows:
0.0 ppm (63H), 0.6 ppm (6H), 0.9 ppm (3H), 1.3 ppm (4H), 1.5 ppm (4H), 2.2 ppm (2H), 3.3-3.7 ppm (21H).

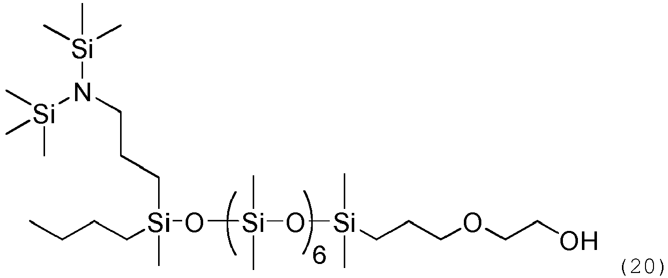

### [Example A14](Production Method A-IV)

A 300 mL three-neck eggplant flask equipped with a Dimroth condenser, a thermometer and a dropping funnel was charged with 100.0 g of the silicone compound of the formula (20) as obtained in Example A13 and 100.0 g of isopropyl alcohol, which were then warmed to 80°C. To the flask was added 0.4 g of trifluoroacetic acid. The reaction solution was aged at 70 to 80°C for 2 hours. Then, 2.0 g of KYOWAAD® 500 (Kyowa Chemical Industry Co., Ltd.) was added. After stirring at room temperature for 1 hour, the reaction solution was filtered. The solvent and low-molecular weight compounds were distilled off from the filtrate under reduced pressure at an internal temperature up to 130°C to obtain a silicone compound of the formula (21) shown below. The ¹H-NMR data were as follows:
0.0 ppm (45H), 0.6 ppm (6H), 0.9 ppm (3H), 1.3 ppm (4H), 1.5 ppm (4H), 2.2 ppm (2H), 3.3-3.7 ppm (21H).

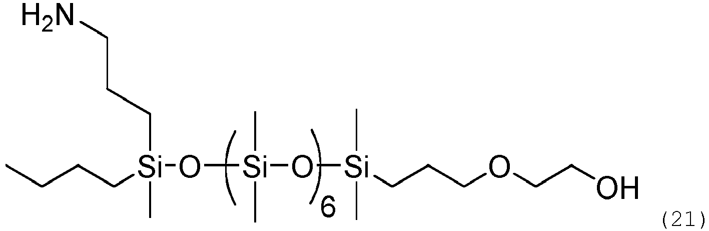

### [Example A15] (Production Method A-II)

The procedures of Example A12 were repeated, except that the silicone compound of the formula (17) as obtained in Example A9 was used in place of the compound of the formula (15) to obtain a silicone compound of the formula (13) shown below. The yield was 103.4 g. The ¹H-NMR data were as follows:
0.0 ppm (45H), 0.6 ppm (6H), 0.9 ppm (3H), 1.3 ppm (4H), 1.5 ppm (2H), 1.7 ppm (2H), 2.0 ppm (3H), 3.3-3.7 ppm (6H), 4.1 ppm (2H), 4.4 ppm (2H), 5.5 ppm (1H), 6.1 ppm (1H), 7.2-7.3 ppm (5H).

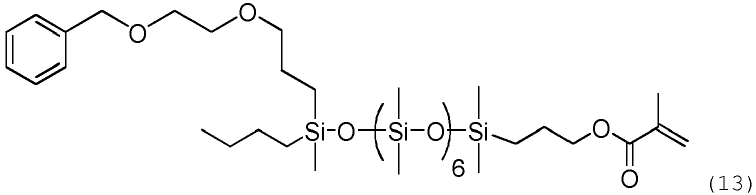

### [Example A16](Production Method A-IV)

A 300 mL three-neck eggplant flask equipped with a Dimroth condenser, a thermometer and a dropping funnel was charged with 100.0 g of the silicone compound of the formula (13) as obtained in Example A15, 50.0 g of ethyl acetate and 50.0 g of ethanol, which were then warmed to 80°C. To the flask was added 0.2 g of palladium on carbon (palladium content: 5%) . The reaction solution was aged at 80 to 90°C for 2 hours under a hydrogen stream at atmospheric pressure. After further stirring at room temperature for 1 hour, the reaction solution was filtered. The solvent and low-molecular weight compounds were distilled off from the filtrate under reduced pressure at an internal temperature of 100°C to obtain 80.5 g of a silicone compound of the formula (22) shown below. The ¹H-NMR data were as follows:
0.0 ppm (45H), 0.6 ppm (6H), 0.9 ppm (3H), 1.3 ppm (4H), 1.5 ppm (2H), 1.7 ppm (2H), 2.0 ppm (3H), 3.3-3.7 ppm (6H), 4.1 ppm (2H), 5.5 ppm (1H), 6.1 ppm (1H).

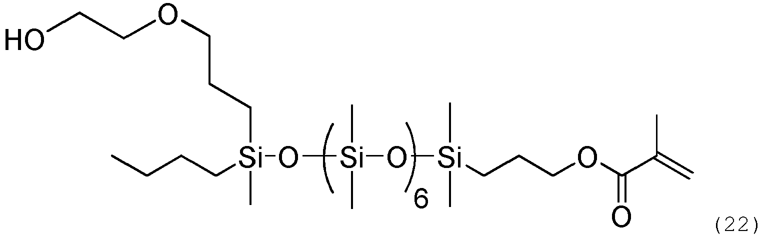

### [Example A17] (Production Method A-II)

The procedures of Example A10 were repeated, except that allyl glycidyl ether was used in place of allylglycol to obtain a silicone compound of the formula (23) shown below. The yield was 107.5 g. The ¹H-NMR data were as follows:
0.0 ppm (45H), 0.6 ppm (6H), 0.9 ppm (3H), 1.3 ppm (4H), 1.5 ppm (4H), 2.2 ppm (8H), 2.6 ppm (1H), 2.8 ppm (1H), 3.1 ppm (1H), 3.4 ppm (3H), 3.7 ppm (1H).

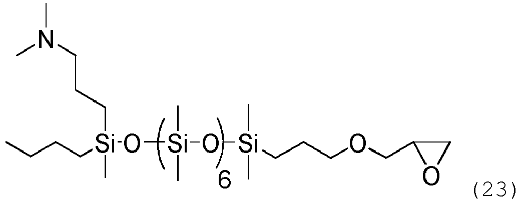

### [Example A18] (Production Method A-IV)

The procedures of Example A16 were repeated, except that the silicone compound of the formula (17) as obtained in Example A9 was used in place of the silicone compound of the formula (13) to obtain a silicone compound of the formula (24) shown below. The yield was 76.5 g. The ¹H-NMR data were as follows:
0.0 ppm (45H), 0.6 ppm (4H), 0.9 ppm (3H), 1.3 ppm (4H), 1.5 ppm (2H), 3.3-3.7 ppm (6H), 4.7 ppm (1H).

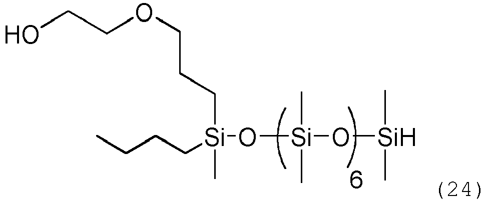

### [Example A19] (Production Method A-II)

The procedures of Example A17 were repeated, except that the silicone compound of the formula (24) as obtained in Example A18 was used in place of the silicone compound of the formula (15) to obtain a silicone compound of the formula (25) shown below. The yield was 88.0 g. The ¹H-NMR data were as follows:
0.0 ppm (45H), 0.6 ppm (6H), 0.9 ppm (3H), 1.3 ppm (6H), 1.5 ppm (2H), 3.3-3.7 ppm (6H), 2.6 ppm (1H), 2.8 ppm (1H), 3.1 ppm (1H), 3.4 ppm (3H), 3.7 ppm (1H).

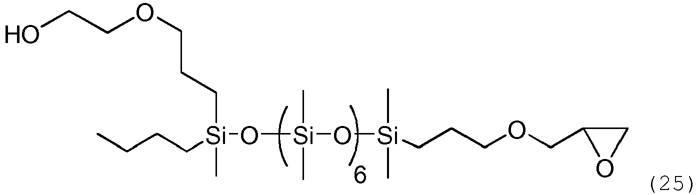

### [Example A20](Production Method A-III)

A 300 mL three-neck eggplant flask equipped with a Dimroth condenser, a thermometer and a dropping funnel was charged with 50.0 g of the silicone compound of the formula (25) as obtained in Example A19, 50.0 g of n-hexane and 5.0 g of triethylamine, and then cooled to 10°C. Under a nitrogen stream, 6.5 g of methacrylic acid chloride was added dropwise, followed by stirring at room temperature for 1 hour. Then, 4.0 g of ethanol was added, followed by stirring at room temperature for 1 hour. The mixture was washed three times with 50.0 g of pure water. The solvent and low-molecular weight compounds were distilled off from the upper layer at an internal temperature of 100°C under reduced pressure to obtain 46.3 g of a silicone compound of the following formula (26) shown below. The ¹H-NMR data were as follows:
0.0 ppm (45H), 0.6 ppm (6H), 0.9 ppm (3H), 1.3 ppm (6H), 1.5 ppm (2H), 3.3-3.7 ppm (4H), 2.6 ppm (1H), 2.8 ppm (1H), 3.1 ppm (1H), 3.4 ppm (3H), 3.7 ppm (1H), 4.1 ppm (2H), 5.5 ppm (1H), 6.1 ppm (1H).

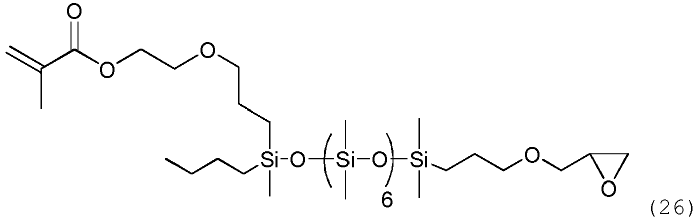

### [Example A21] (Production Method A-I)

The procedures of Example A1 were repeated, except that the amounts were changed to 6.2 g for 2,4,6,8-tetramethyl-2,4,6,8-tetra(N,N-dimethylaminopropyl) cyclotetrasiloxane, 19.6 g for the n-butyllithium solution in hexane, and 10.6 g for methacryloyloxypropyldimethylchlorosilane, to obtain a silicone compound of the formula (27) shown below. The yield was 730.1 g. The ¹H-NMR data were as follows:
0.0 ppm (549H), 0.6 ppm (6H), 0.9 ppm (3H), 1.3 ppm (4H), 1.5 ppm (2H), 1.7 ppm (2H), 2.0 ppm (3H), 2.2 ppm (8H), 4.1 ppm (2H), 5.5 ppm (1H), 6.1 ppm (1H).

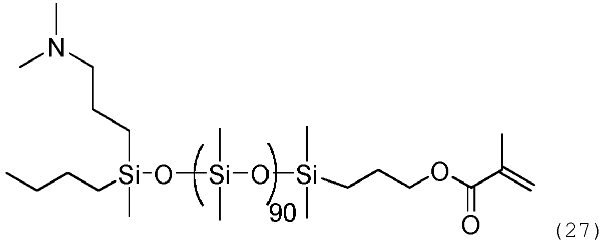

### [Example A22] (Production Method A-I)

The procedures of Example A1 were repeated, except that the amounts were changed to 3.1 g for 2,4,6,8-tetramethyl-2,4,6,8-tetra(N,N-dimethylaminopropyl) cyclotetrasiloxane, 9.8 g for the n-butyllithium solution in hexane, and 5.3 g for methacryloyloxypropyldimethylchlorosilane, to obtain a silicone compound of the formula (28) shown below. The yield was 712.0 g. The ¹H-NMR data were as follows:
0.0 ppm (1119H), 0.6 ppm (6H), 0.9 ppm (3H), 1.3 ppm (4H), 1.5 ppm (2H), 1.7 ppm (2H), 2.0 ppm (3H), 2.2 ppm (8H), 4.1 ppm (2H), 5.5 ppm (1H), 6.1 ppm (1H).

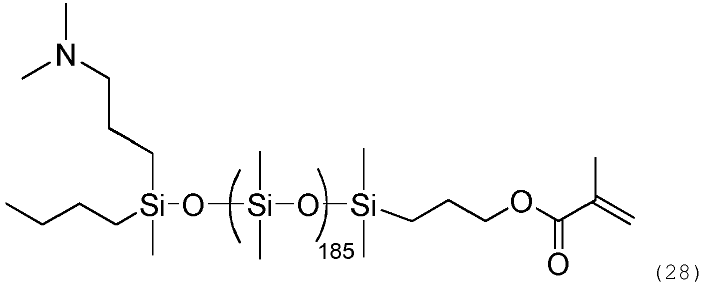

### [Examples B1-B7]

### (Production Method B)

In the following Examples, ¹H-NMR analysis was conducted on ECS500 (JEOL Ltd.), using deuterochloroform as the solvent for measurement.

Purities were determined by the following method.

### Method for measuring a purity of silicones (GC method)

In the present specification, all gas chromatography measurements were carried out under the following conditions. An Agilent gas chromatograph (FID detector) was used.
Capillary column: J&W HP-5MS (0.25 mm × 30 m × 0.25 pm)
Temperature ramp program: 50°C (5 min) → 10°C/min → 250°C (hold)
Inlet temperature: 250°C
Detector temperature FID: 300°C
Carrier gas: helium (1.0 ml/min)
Split ratio: 50: 1
Injection volume: 1 pL.

In Example B3 described below, GPC measurement was conducted to determine if any cleavage of the siloxane bonds of the envisaged compound occurred or not. GPC measurement was carried out under the following conditions.
Measuring device: Tosoh HLC-8220
Measurement conditions:
Column temperature: 40°C
Flow rate: 0.6 ml/min
Mobile phase: THF
Column arrangement:
TSK gel Super H2500 (6×150)
TSK gel Super HM-N (6×150)
•Guard column TSK gel guardcolumn Super H-H (4.6×35)
Injection volume: 50 µl
Sample concentration: 0.3%
Detector: RI.
Hereinafter, "Me" means a methyl group.

### [Example B1]

### Synthesis of a Compound of General Formula (3)

A 2-liter flask equipped with a Dimroth condenser, a thermometer, a dropping funnel and a stirrer was charged with 714 g (2 mols) of dihydrogen polysiloxane of the formula (a) shown below, and then warmed to 80°C.

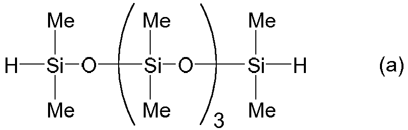

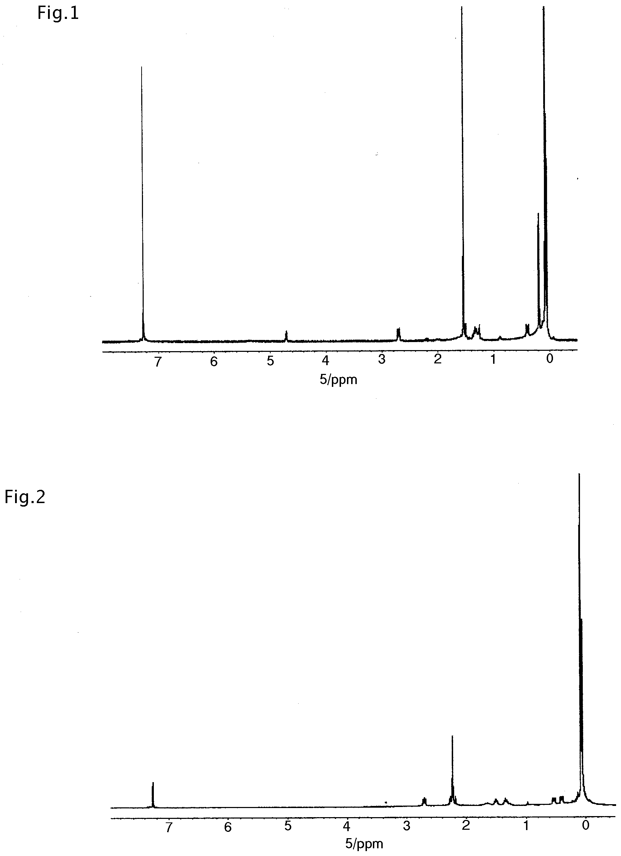

To the flask was added 1.6 g (10 ppm of platinum, calculated based on the mass of (a)) of a toluene solution of a vinylsiloxane complex of chloroplatinic acid neutralized with sodium bicarbonate (platinum content: 0.5 wt%). Then, 201 g (1 mol) of bis(trimethylsilyl)allyl amine charged in the dropping funnel was added dropwise into the flask at 80 to 90°C over a period of 1 hour. After the dropwise addition, the reaction mixture was aged at 80 to 90°C for 1 hour. After the aging, the reaction solution was sampled and analyzed by GC, which showed that no residual bis(trimethylsilyl)allylamine remained. The reaction mixture thus obtained was subjected to vacuum distillation at a pressure of 1 mmHg and a temperature of 130°C to obtain 447 g of a clear and colorless product. The product was confirmed, by ¹H-NMR analysis, to be a hydrogen silicone of the formula (b) shown below. The purity of the compound as determined by GC was 98.1%. The yield was 0.80 mol, and the percent yield was 80%. 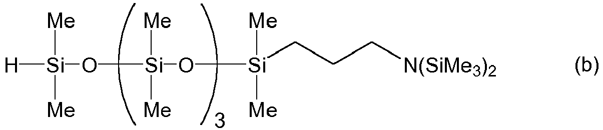 Fig. 1 shows its ¹H-NMR spectrum.

### [Example B2]

### Synthesis of a Compound of General Formula (4)

A one-liter flask equipped with a Dimroth condenser, a thermometer, a dropping funnel and a stirrer was charged with 26g (0.3 mol) of dimethylallylamine and 90 g of toluene, and then warmed to 80°C. To the flask was added 0.8 g (25 ppm of platinum, calculated based on the mass of (b)) of a toluene solution of a vinylsiloxane complex of chloroplatinic acid neutralized with sodium bicarbonate (platinum content: 0.5 wt%) . Then, 150 g (0.27 mol) of the hydrogen silicone of the formula (b) as obtained in Example B1 was charged in the dropping funnel, and was added dropwise into the flask at 80 to 90°C over a period of 1 hour. After the dropwise addition, the reaction mixture was aged at 80 to 90°C for 1 hour. After the aging, the reaction mixture was sampled and subjected to an alkali test for hydrogen gas generation. No generation of hydrogen gas was observed, indicating that no residual hydrogen silicone remained. Then, toluene and unreacted dimethylallylamine, which had been fed in an excess amount, were distilled off under reduced pressure at an internal temperature of 100°C to obtain 161 g of a clear and colorless residue. The residue was confirmed, by ¹H-NMR analysis, to be a silicone of the formula (c) which had different terminals as shown below (0.25 mol; 93% yield). Fig. 2 shows its ¹H-NMR spectrum.

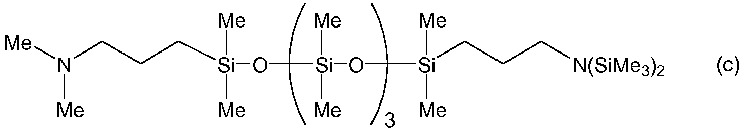

### [Example B3]

### Synthesis of Silicone having a Terminal Amino Group and another Terminal Functional Group

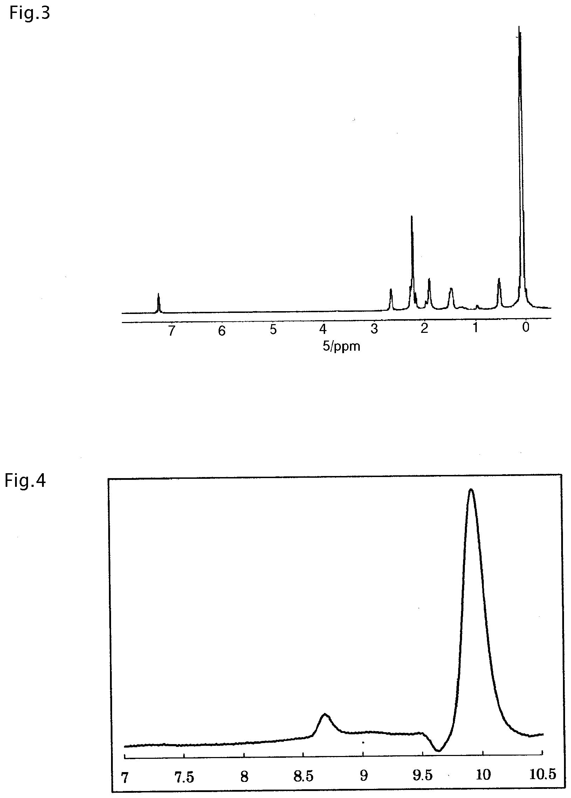

A one-liter flask equipped with a Dimroth condenser, a thermometer and a stirrer was charged with 160 g (0.25 mol) of silicone of the formula (c) as obtained in Example B2, 160 g (2.67 mols) of isopropyl alcohol (a part of it acts as a solvent), and 1.6 g of acetic acid. The reaction mixture thus obtained was allowed to react at 80°C for 3 hours. A peak of trimethylsilylated isopropyl alcohol was confirmed by GC. The completion of the reaction was confirmed by ¹H-NMR. The content of the flask was cooled to room temperature, followed by the addition of 8.0 g of hydrotalcite (KYOWAAD® 500, Kyowa Chemical Industry Co., Ltd.). After stirring for one hour, the reaction mixture was filtered. Isopropyl alcohol was distilled off from the filtrate under reduced pressure at an internal temperature up to 100°C, to obtain 115 g of a clear and colorless residue. The residue was confirmed, by ¹H-NMR analysis, to be a silicone having a terminal amino group and another terminal functional group as represented by the formula (d) shown below (0.23 mol; yield 92%). Fig. 3 shows its ¹H-NMR spectrum. GPC was conducted on the residue, which did not show any sign of cleavage of the siloxane bonds. GPC data was attached as Fig. 4. The main peak found in the GPC measurement was analyzed, on the basis of polystyrene standard, to be: Mn=1,160, Mw=1,170, and Nw/Mn=1.00, with a peak area of 96.5%.

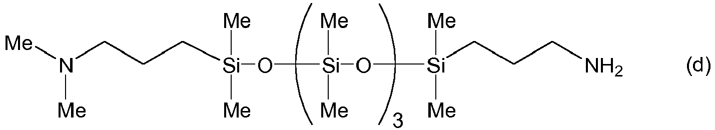

### [Example B4]

### Synthesis of a Compound of General Formula (4)

A one-liter flask equipped with a Dimroth condenser, a thermometer, a dropping funnel and a stirrer was charged with 30 g (0.3 mol) of allylglycol and 90 g of toluene, and then warmed to 80°C. To the flask was added 0.8 g of a toluene solution of a vinylsiloxane complex of chloroplatinic acid neutralized with sodium bicarbonate (platinum content: 0.5 wt%) . Then, 150 g (0.27 mol) of the hydrogen silicone of the formula (b) as obtained in Example B1 was charged in the dropping funnel, and was added dropwise into the flask at 80 to 90°C over a period of 1 hour. After the dropwise addition, the reaction mixture was aged at 80 to 90°C for 1 hour. After the aging, the reaction mixture was sampled and subjected to an alkali test for hydrogen gas generation. No generation of hydrogen gas was observed, indicating that no residual hydrogen silicone of the formula (b) remained. Then, toluene and unreacted allylglycol, which had been fed in an excess amount, were distilled off under reduced pressure at an internal temperature of 100°C, to obtain 171 g of a clear and colorless residue. The residue was confirmed, by ¹H-NMR analysis, to be a silicone of the formula (e) shown below (0.26 mol; yield 96%) .

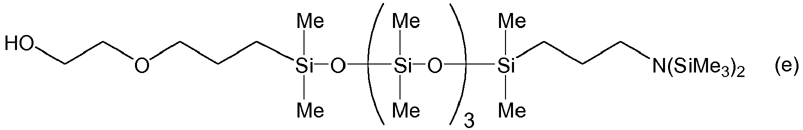

### [Example B5]

### Synthesis of a Silicone of General Formula (1) having a Terminal Amino Group and another Terminal Functional Group

A one-liter flask equipped with a Dimroth condenser, a thermometer and a stirrer was charged with 170 g (0.26 mol) of the silicone of the formula (e) as obtained in Example B4, 170 g of isopropyl alcohol, and 1.7 g of acetic acid. The reaction mixture thus obtained was allowed to react at 80°C for 3 hours. A peak of trimethylsilylated isopropyl alcohol was confirmed by GC. The completion of the desilylation was confirmed by an area ratio of isopropyl alcohol to trimethylsilylated isopropyl alcohol. The completion of the reaction was also confirmed by ¹H-NMR. The content of the flask was cooled to room temperature, followed by the addition of 8.5 g of hydrotalcite (KYOWAAD® 500, Kyowa Chemical Industry Co., Ltd.). After stirring for one hour, the reaction mixture was filtered. Isopropyl alcohol was distilled off from the filtrate under reduced pressure at an internal temperature up to 100°C, to obtain 121 g of a clear and colorless residue. The residue was confirmed, by ¹H-NMR analysis, to be a silicone of the formula (f) shown below (0.23 mol; yield 90%). GPC was conducted on the residue, which did not show any sign of cleavage of the siloxane bonds. The main peak found in the GPC measurement was analyzed, on the basis of polystyrene standard, to be: Mn=1,210, Mw=1,210, and Nw/Mn=1.00, with a peak area of 96.5%.

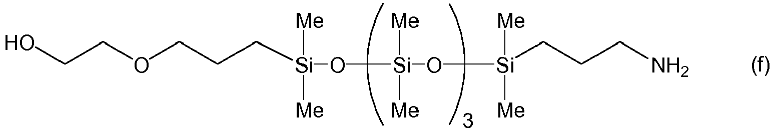

### [Example B6]

### Synthesis of a Compound of General Formula (4)

A one-liter flask equipped with a Dimroth condenser, a thermometer, a dropping funnel and a stirrer was charged with 48 g (0.3 mol) of diethyleneglycol allylmethyl ether and 90 g of toluene, and then warmed to 80°C. To the flask was added 0.8 g of a toluene solution of a vinylsiloxane complex of chloroplatinic acid neutralized with sodium bicarbonate (platinum content: 0.5 wt%). Then, 150 g (0.27 mol) of the hydrogen silicone of the formula (b) as obtained in Example B1 was charged in the dropping funnel, and was added dropwise into the flask at 80 to 90°C over a period of 1 hour. After the dropwise addition, the reaction mixture was aged at 80 to 90°C for 1 hour. After the aging, the reaction mixture was sampled and subjected to an alkali test for hydrogen gas generation. No generation of hydrogen gas was observed, indicating that no residual hydrogen silicone of the formula (b) remained. Then, toluene and unreacted diethyleneglycol allylmethyl ether, which had been fed in an excess amount, were distilled off under reduced pressure at an internal temperature of 100°C, to obtain 186 g of a clear and colorless residue. The residue was confirmed, by ¹H-NMR analysis, to be a silicone of the formula (g) shown below (0.26 mol; yield 96%).

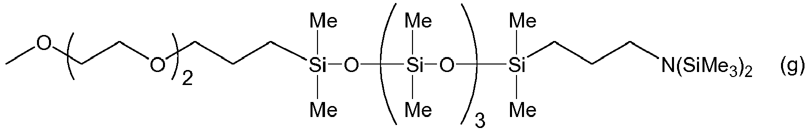

### [Example B7]

### Synthesis of a Silicone having a Terminal Amino Group and another Terminal Functional Group

A one-liter flask equipped with a Dimroth condenser, a thermometer and a stirrer was charged with 185 g (0.26 mol) of the silicone of the formula (g) as obtained in Example B6, 185 g of isopropyl alcohol, and 1.8 g of acetic acid. The reaction mixture thus obtained was allowed to react at 80°C for 3 hours. A peak of trimethylsilylated isopropyl alcohol was confirmed by GC. The completion of the reaction was confirmed by an area ratio of isopropyl alcohol to trimethylsilylated isopropyl alcohol. The completion of the reaction was also confirmed by ¹H-NMR. The content of the flask was cooled to room temperature, followed by the addition of 9.0 g of hydrotalcite (KYOWAAD® 500, Kyowa Chemical Industry Co., Ltd.). After stirring for one hour, the reaction mixture was filtered. Isopropyl alcohol was distilled off from the filtrate under reduced pressure at an internal temperature up to 100°C, to obtain 138 g of a clear and colorless residue. The residue was confirmed, by ¹H-NMR analysis, to be a silicone of the formula (h) shown below (0.24 mol; yield 92%) . GPC was conducted on the residue, which did not show any sign of cleavage of the siloxane bonds. The main peak found in the GPC measurement was analyzed, on the basis of polystyrene standard, to be: Mn=1, 330, Mw=1, 340, and Nw/Mn=1.00, with a peak area of 96.5%.

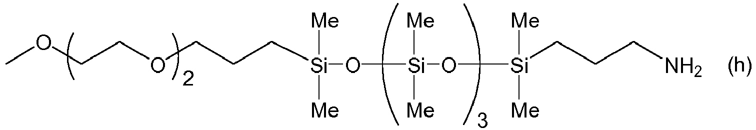

### [Comparative Example B1]

### Synthesis of a Silicone having a Terminal Amino Group and a Terminal Hydroxyl Group

A one-liter flask equipped with a Dimroth condenser, a thermometer and a stirrer was charged with 339 g (1.0 mol) of di(ethyleneglycol)tetramethyldisiloxane, 249 g (1.0 mol) of bis(aminopropyl)tetramethyldisiloxane, and 223 g (0.75 mol) of octamethyltetrasiloxane. 0.4 Gram of trifluoromethane sulfonic acid was added to the flask, and the reaction mixture thus obtained was allowed to react at 25°C for 8 hours. 2.0 Grams of hydrotalcite (KYOWAAD® 500, Kyowa Chemical Industry Co., Ltd.) was added. After stirring for one hour, the reaction mixture was filtered, to obtain 770 g of a clear and colorless filtrate. The GC measurement of this filtrate revealed silicones of a wide variety of structures. As a result, it was impossible to isolate a silicone having a terminal amino group and a terminal hydroxyl group.

### [Comparative Example B2]

A 2-liter flask equipped with a Dimroth condenser, a thermometer, a dropping funnel and a stirrer was charged with 714 g (2 mols) of dihydrogen polysiloxane of the formula (a) shown below, and then warmed to 80°C.

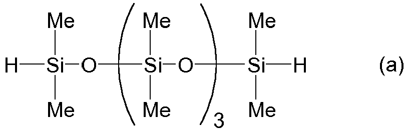

To the flask was added 1.6 g of a toluene solution of a vinylsiloxane complex of chloroplatinic acid neutralized with sodium bicarbonate (platinum content: 0.5 wt%). Then, 57 g (1 mol) of allylamine was charged in the dropping funnel, and was added dropwise into the flask at 80 to 90°C over a period of 1 hour. After the dropwise addition, the reaction mixture was ananylzed by GC, which showed a wide variety of compounds of different structures, including high molecular weight substances, which are considered to be by-products due to dehydrogenation reaction.

### INDUSTRIAL APPLICABILITY

The compound according to the invention has two different terminal functional groups with different reactivities, which allow different modifications with this single compound. In particular, the silicone compound according to the invention has different functional groups at terminal ends, and has a sufficient siloxane content. The compound and the method of its production according to the invention are useful for resin modification and as a material for medical devices.

## Claims

1. A silicone compound represented by the general formula (I): 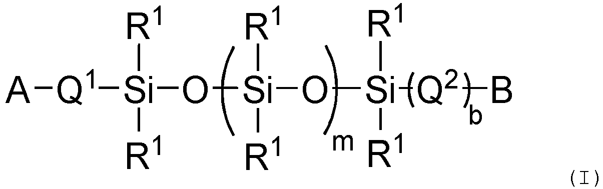 wherein R¹ is, independently at each occurrence, a substituted or unsubstituted, saturated or unsaturated, monovalent hydrocarbon group having 1 to 10 carbon atoms; "m" is an integer of from 1 to 300; Q¹ and Q² are, independently of each other, a substituted or unsubstituted, divalent hydrocarbon group having 1 to 20 carbon atoms, which may comprise one or more bonds selected from the group consisting of an amide bond, an ether bond, an ester bond, a urethane bond and an unsaturated bond; A is a functional group that is unreactive with an organometallic compound, a functional group that is radically polymerizable, or a functional group or atom that is reactive with an organometallic compound; B is a hydrogen atom, or a group or atom selected from the groups or atoms as defined above for A, with the proviso that A and B are functional groups or atoms different from each other; and "b" is 0 or 1, with the proviso that b is 0 when B is a hydrogen atom, and b is 1 when B is not a hydrogen atom.

2. The silicone compound of Claim 1, wherein the functional group that is unreactive with an organometallic compound is selected from a silylated hydroxyl group, a benzylated hydroxyl group, a silylated 1,2-ethanediol group, a benzylated 1,2-ethanediol group, an alkoxy group, an alkenyl group, a tertiary amino group, a silylated tertiary amino group, a benzylated tertiary amino group, a quaternary ammonium group, a styryl group, a nitro group, an azide group, an aryl group, an arylalkenyl group, a silylated phenol group, and a silylated thiol group.

3. The silicone compound of Claim 1 or 2, wherein the functional group that is radically polymerizable is a (meth)acryloyl or (meth)acrylamide group.

4. The silicone compound of any one of Claims 1 to 3, wherein the functional group or atom that is reactive with an organometallic compound is a group selected from an epoxy group, a carboxyl group, an isocyanate group, an alkoxysilyl group, a hydroxyl group, a 1, 2-ethanediol group, a primary amino group, a secondary amino group, a phenol group, and a thiol group, or a halogen atom.

5. The silicone compound of any one of Claims 1 to 4, wherein Q¹ and Q² are, independently of each other, a moiety represented by either of the formula (i) or (ii) : 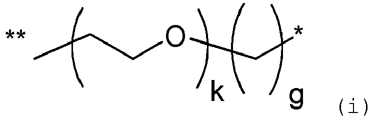 or 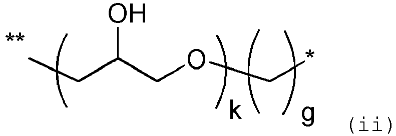 wherein "k" is an integer of from 0 to 6, "g" is an integer of from 1 to 4 when "k" equals zero, or "g" is an integer of from 1 to 17 when "k" is not zero, with the proviso that 1≦3k+g≦20, the symbol "*" denotes a site to which the silicon atom in formula (I) is attached; and the symbol "**" denotes a site to which A or B is attached.

6. The silicone compound of Claim 5, wherein k is 1, and g is an integer of from 1 to 4.

7. The silicone compound of Claim 5, wherein k is 0.

8. The silicone compound of any one of Claims 2 to 7, wherein A is selected from the group consisting of a hydroxyl group, a silylated hydroxyl group, a benzylated hydroxyl group, a 1,2-ethanediol group, a silylated 1,2-ethanediol group, a benzylated 1,2-ethanediol group, an alkoxy group, an alkenyl group, a primary amino group, a tertiary amino group, a silylated tertiary amino group, a quaternary ammonium group, and a halogen atom.

9. The silicone compound of Claim 8, wherein A is a group selected from a silylated hydroxyl group, an alkoxy group, an alkenyl group, a benzylated hydroxyl group, a hydroxyl group, a primary amino group, and a tertiary amino group; and B is a hydrogen atom, or a group selected from a (meth)acryloyl group, a (meth)acrylamide group, a hydroxyl group, a primary amino group, a tertiary amino group, an epoxy group, and akloxysilyl group, with the proviso that A and B are different from each other.

10. The silicone compound of any one of Claims 1 to 9, wherein either of A and B is a functional group that is radically polymerizable.

11. A polymer comprising repeating units derived from addition polymerization of the radically polymerizable functional group of the silicone compound of Claim 10.

12. A copolymer comprising repeating units derived from polymerization of the radically polymerizable functional group of the silicone compound of Claim 10 and one or more other compounds having a group that is polymerizable with the radically polymerizable functional group.

13. An ophthalmic device comprised of the copolymer of claim 12.

14. The silicone compound of Claim 4, which is represented by the general formula (1): 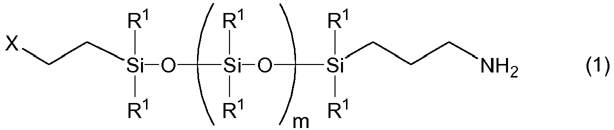 wherein "m" is an integer of from 1 to 300; R¹ is, independently at each occurrence, a substituted or unsubstituted, saturated or unsaturated, monovalent hydrocarbon group having 1 to 10 carbon atoms; X is an organic functional group having 0 to 48 carbon atoms represented by -Q⁴B' wherein Q⁴ is a single bond or a substituted or unsubstituted, divalent hydrocarbon group having 1 to 18 carbon atoms, which may comprise one or more bonds selected from the group consisting of an amide bond, an ether bond, an ester bond, a urethane bond and an unsaturated bond; and B' is a functional group that is unreactive with an organometallic compound, a functional group that is radically polymerizable, or a functional group that is reactive with an organometallic compound.

15. The silicone compound of Claim 14, wherein, in the general formula (1), "m" is an integer of from 1 to 6; R¹ is, independently at each occurrence, a substituted or unsubstituted, saturated or unsaturated, monovalent hydrocarbon group having 1 to 6 carbon atoms.

16. The silicone compound of Claim 15, wherein X is an organic functional group selected from a hydroxyl group, an alkoxy group, an alkenyl group, a secondary amino group, a tertiary amino group, a quaternary ammonium group, a halogen atom, a nitro group, an azide group, an epoxy group, an aryl group, an arylalkenyl group, a phenol group, a thiol group, a carboxyl group; and a C₁-C₄₈ alkyl group substituted with one of these groups, wherein the alkyl group may include one or more heteroatoms interrupting the carbon-carbon linkage.

17. The silicone compound of Claim 16, wherein the alkoxy group is a methoxy or ethoxy group, the alkenyl group is a vinyl or allyl group, the arylalkenyl group is a styryl group, and the C₁-C₄₈ alkyl group is free of a heteroatom interrupting a carbon-carbon linkage, or includes one or more oxygen atoms interrupting the carbon-carbon linkage.

18. The silicone compound of Claim 16 or 17, wherein X is a group selected from a hydroxyl group, an alkoxy group, a tertiary amino group; and a C₂-C₁₀ alkyl group substituted with one of these groups.

19. A method for preparing a silicone compound represented by the general formula (I): 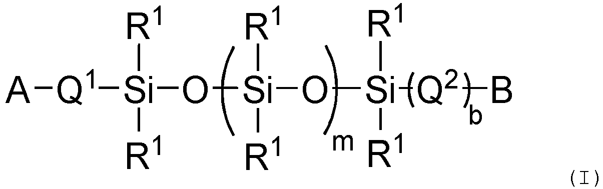 wherein R¹ is, independently at each occurrence, a substituted or unsubstituted, saturated or unsaturated, monovalent hydrocarbon group having 1 to 10 carbon atoms; "m" is an integer of from 1 to 300; Q¹ and Q² are, independently of each other, a substituted or unsubstituted, divalent hydrocarbon group having 1 to 20 carbon atoms, which may comprise one or more bonds selected from the group consisting of an amide bond, an ether bond, an ester bond, a urethane bond and an unsaturated bond; A is a functional group that is unreactive with an organometallic compound, a functional group that is radically polymerizable, or a functional group or atom that is reactive with an organometallic compound; B is a hydrogen atom, or a group or atom selected from the groups or atoms as defined above for A, with the proviso that A and B are functional groups or atoms different from each other; and "b" is 0 or 1, with the proviso that b is 0 when B is a hydrogen atom, and b is 1 when B is not a hydrogen atom; said method comprising:
reacting a siloxane of the formula (8): 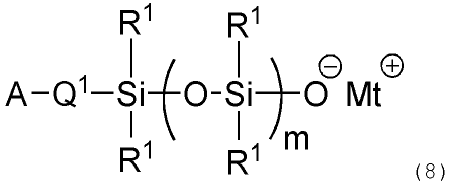
wherein R¹, Q¹, "m" and A are as defined above, and Mt is an alkali metal atom;
with a halogenated silyl compound of the formula (7): 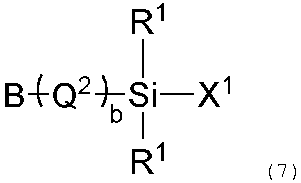 wherein R¹, Q², "b" and B are as defined above, and X¹ is a halogen atom;
to obtain the silicone compound of the formula (I).

20. The method according to Claim 19, which comprises steps of:
reacting a cyclic siloxane of the formula (iii): 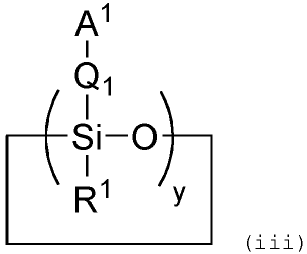 wherein "y" is an integer of from 3 to 10, R¹ and Q¹ are as defined above, and A¹ is a functional group that is unreactive with an organometallic compound,
or a disiloxane of the formual (iv): 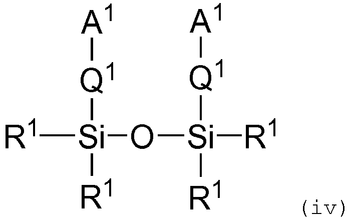 wherein R¹, Q¹ and A¹ are as defined above;
with the organometallic compound, to obtain a metal silicate compound of the formula(v): 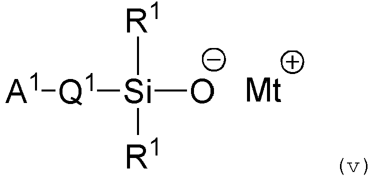 wherein R¹, Q¹, Mt and A¹ are as defined above;
reacting the metal silicate compound of the formula(v) with a cyclic siloxane to obtain a siloxane of the formula (8'): 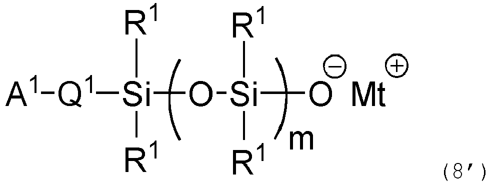 wherein R¹, Q¹, "m", Mt and A¹ are as defined above; and
reacting the siloxane of the formula (8') with the halogenated silyl compound of the formula (7) to obtain the silicone compound of the formula (I).

21. A method for preparing a compound as defined in any one of Claims 14 to 17, comprising:
subjecting a compound of the formula (4): 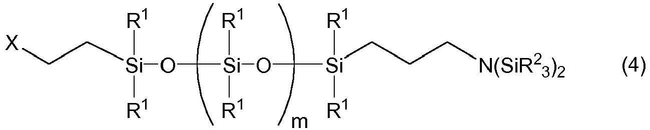 wherein "m" is an integer of from 1 to 6; R¹ is, independently at each occurrence, a substituted or unsubstituted, saturated or unsaturated, monovalent hydrocarbon group having 1 to 6 carbon atoms; X is an organic functional group having 0 to 48 carbon atoms; and R² is a C₁₋₃ alkyl group;
to a desilylation reaction to obtain a silicone of the general formula (1) .

22. The method according to Claim 21, wherein the desilylation reaction is carried out in the presence of an alcohol.

23. The method according to Claim 22, wherein the alcohol is selected from methanol, ethanol, 1-propanol, 2-propanol, and 1-butanol.

24. The method according to any one of Claims 21 to 23, wherein the desilylation reaction is carried out in the presence of an acid catalyst.

25. The method according to Claim 24, wherein the acid catalyst is an acid having an acid dissociation constant (pKa) of at least 2.0 in water.

26. The silicone compound of Claim 9, which is represented by the formula (3): 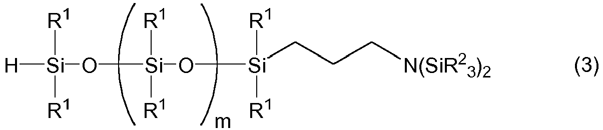 wherein "m" is an integer of from 1 to 6; R¹ is, independently at each occurrence, a substituted or unsubstituted, saturated or unsaturated, monovalent hydrocarbon group having 1 to 6 carbon atoms; and R² is a C₁₋₃ alkyl group.

27. A method of preparing a silicone compound represented by the formula (3): 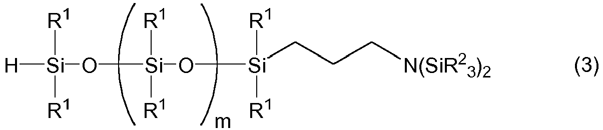 wherein "m" is an integer of from 1 to 6; R¹ is, independently at each occurrence, a substituted or unsubstituted, saturated or unsaturated, monovalent hydrocarbon group having 1 to 6 carbon atoms; and R² is a C₁₋₃ alkyl group;
by an addition reaction of a dihydrogenpolysiloxane of the general formula (2): 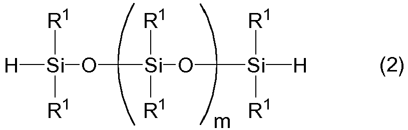 wherein "m" and R¹ are as defined above,
with a bis(tri-C₁₋₃-alkylsilyl)allylamine of the formula (6):
CH₂=CHCH₂N(SiR²₃)₂ (6)
wherein R² is as defined above.

28. The method according to Claim 27, wherein the addition reaction is carried out by adding dropwise the bis(tri-C₁₋₃-alkylsilyl)allylamine to the dihydrogenpolysiloxane in the presence of chloroplatinic acid or a Karstedt catalyst.
